# EUROPEAN PATENT APPLICATION

(11) **EP 4 832 330 A1**
(43) Date of publication of application: **28.10.2026**
(21) Application number: 25741357.5
(22) Date of filing: 03.01.2025
(51) Int. Cl.: H02M 3/335

(54) **POWER CONVERSION APPARATUS AND CONTROL METHOD THEREFOR**

(30) Priority: 18.01.2024 CN 202410074361
(71) Applicant: Huawei Digital Power Technologies Co., Ltd., Shenzhen, Guangdong 518043 (CN)
(72) Inventor: CHEN, Dong, Shenzhen, Guangdong 518043 (CN); RONG, Xianliang, Shenzhen, Guangdong 518043 (CN); SHI, Lei, Shenzhen, Guangdong 518043 (CN)
(74) Representative: Isarpatent
(86) International application number: PCT/CN2025/070427
(87) International publication number: WO 2025/152794

(57) **Abstract**

This application provides a power conversion apparatus and a control method therefor. The power conversion apparatus includes a direct current end, a direct current side bridge circuit, a transformer, an alternating current side bridge circuit, an alternating current end, and a controller. The transformer includes a primary winding and a secondary winding, and the direct current side bridge circuit and the alternating current side bridge circuit include switching transistors. The direct current side bridge circuit is connected between the direct current end and the primary winding, and the alternating current side bridge circuit is connected between the secondary winding and the alternating current end. The controller is configured to: in a process in which an alternating current of the alternating current end approaches 0, first control a switching frequency of the switching transistor to increase to a maximum switching frequency value of the switching transistor; and then control the switching frequency of the switching transistor to be less than the maximum switching frequency value when the alternating current is 0; or in a process in which an alternating current of the alternating current end departs from 0, first control a switching frequency of the switching transistor to increase to a maximum switching frequency value of the switching transistor, and then control the switching frequency to decrease. This application helps improve control effect and output performance of the power conversion apparatus.

## Description

This application claims priority to Chinese Patent Application No. 202410074361.4, filed with the China National Intellectual Property Administration on January 18, 2024 and entitled "POWER CONVERSION APPARATUS AND CONTROL METHOD THEREFOR", which is incorporated herein by reference in its entirety.

### TECHNICAL FIELD

This application relates to the field of power supply technologies, and in particular, to a power conversion apparatus and a control method therefor.

### BACKGROUND

A dual active bridge (dual active bridge, DAB) converter provides electrical isolation between input and output, has advantages such as a high power density and easy implementation of soft switching, and can satisfy requirements in various application scenarios of conversion between a direct current voltage and an alternating current voltage. Therefore, DAB converters have been widely used.

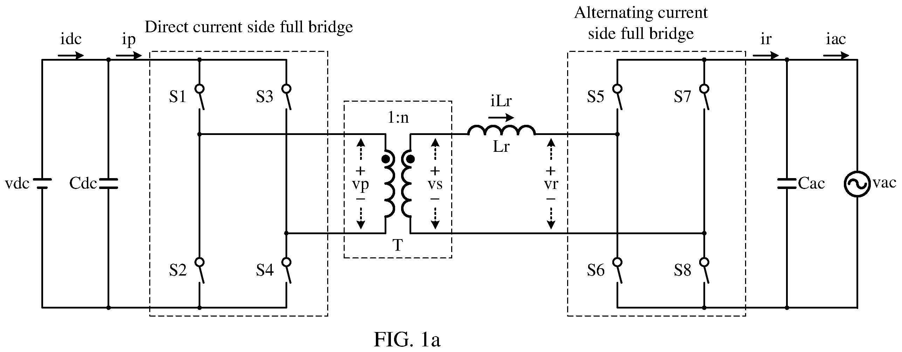

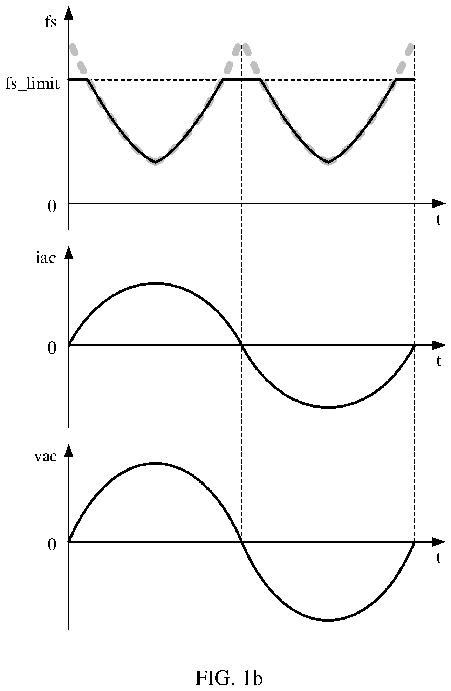

A conventional DAB converter mainly uses a circuit structure shown in FIG. 1a. As shown in FIG. 1a, the DAB converter mainly includes a direct current side full bridge, a transformer T, an inductor Lr, and an alternating current side full bridge. The direct current side full bridge includes a first bridge arm and a second bridge arm that are connected in parallel, and the alternating current side full bridge includes a third bridge arm and a fourth bridge arm that are connected in parallel. The first bridge arm includes a switch S1 and a switch S2 that are connected in series, the second bridge arm includes a switch S3 and a switch S4 that are connected in series, the third bridge arm includes a switch S5 and a switch S6 that are connected in series, and the fourth bridge arm includes a switch S7 and a switch S8 that are connected in series. The DAB converter shown in FIG. 1a may be controlled by adjusting a switching frequency, a phase difference between a phase of the switch S1 and a phase of the switch S4, a phase difference between a phase of the switch S5 and a phase of the switch S8, and a phase difference between the phase of the switch S1 and the phase of the switch S5. In practical application, to achieve a low inductor current peak and a low current loss, for a specified direct current voltage vdc, alternating current voltage vac, and alternating current iac, a particular optimal switching frequency fs is usually sought according to a basic principle of the DAB converter. For example, when the alternating current voltage vac and the alternating current iac are as shown in FIG. 1b, the optimal switching frequency fs to be sought corresponds to a gray dashed line shown in FIG. 1b. As shown in FIG. 1b, when the alternating current iac is 0, the sought optimal switching frequency fs is very high. However, in an actual DAB converter, due to limitations of a controller, a switching transistor, a transformer, and the like, a switching frequency of the switching transistor has an upper limit value. Therefore, an actual curve of the switching frequency of the switching transistor corresponds to a black solid line shown in FIG. 1b.

It can be seen from FIG. 1b that, when the alternating current iac is low or the alternating current voltage vac is low, the switching frequency fs of the switching transistor in the DAB converter reaches an upper limit value fs_limit. When the switching frequency fs reaches the upper limit value fs_limit, closed-loop control on the switching frequency fs is prone to limitation by a limiter, affecting control effect of the DAB converter. In addition, at a zero-crossing moment of the alternating current iac and a zero-crossing moment of the alternating current voltage vac, operating mode switching occurs in the direct current side full bridge and/or the alternating current side full bridge of the DAB converter. However, in this case, the switching frequency fs operates at the upper limit value fs_limit. This easily causes distortion of voltage and current waveforms generated by the DAB converter during operating mode switching, degrading output performance of the DAB converter.

### SUMMARY

This application provides a power conversion apparatus and a control method therefor, to help improve control effect and output performance of the power conversion apparatus.

According to a first aspect, this application provides a power conversion apparatus. The power conversion apparatus includes a direct current end, a direct current side bridge circuit, a transformer, an alternating current side bridge circuit, an alternating current end, and a controller. The transformer includes a primary winding and a secondary winding. The direct current side bridge circuit and the alternating current side bridge circuit include switching transistors. The direct current side bridge circuit is connected between the direct current end and the primary winding, and the alternating current side bridge circuit is connected between the secondary winding and the alternating current end. The controller is configured to: in a process in which an alternating current of the alternating current end approaches 0, first control a switching frequency of the switching transistor to increase to a maximum switching frequency value of the switching transistor, and then control the switching frequency of the switching transistor to be less than the maximum switching frequency value when the alternating current is 0; and in a process in which the alternating current of the alternating current end departs from 0, first control the switching frequency of the switching transistor to increase to the maximum switching frequency value of the switching transistor, and then control the switching frequency of the switching transistor to decrease.

In this implementation, in the process in which the alternating current of the alternating current end approaches or departs from 0, within a current range (including 0) in which the alternating current of the alternating current end is relatively close to 0, the power conversion apparatus controls switching frequencies of the switching transistors in the direct current side bridge circuit and the alternating current side bridge circuit to be less than maximum switching frequency value, so that the switching frequencies of the switching transistors are not limited by a limiter during closed-loop control, thereby helping improve control effect of the power conversion apparatus. In addition, because the switching frequency of the switching transistor is less than the maximum switching frequency value when the alternating current of the alternating current end is 0, distortion of voltage and current waveforms generated due to operating mode switching performed by the power conversion apparatus when the alternating current of the alternating current end is 0 can be reduced, thereby helping improve output performance of the power conversion apparatus. Further, in the process in which the alternating current of the alternating current end approaches or departs from 0, within a current range in which the alternating current of the alternating current end is relatively far away from 0, the power conversion apparatus controls the switching frequencies of the switching transistors according to a principle of negative correlation between an absolute value of an alternating current and an optimal switching frequency of a switching transistor, to reduce a current peak and a current loss of an inductor in the power conversion apparatus, thereby improving efficiency of the power conversion apparatus.

With reference to the first aspect, in a first possible implementation, the controller is configured to: in the process in which the alternating current of the alternating current end approaches 0, after controlling the switching frequency of the switching transistor to increase to the maximum switching frequency value of the switching transistor, first control the switching frequency of the switching transistor to decrease to a first switching frequency, and then control the switching frequency of the switching transistor to decrease to a second switching frequency.

In this implementation, a switching frequency control manner of the power conversion apparatus is applicable to an application scenario in which the switching frequency increases to the maximum switching frequency value before an absolute value of an alternating current voltage decreases to 0. In the process in which the alternating current approaches or departs from 0, within a current range (including 0) in which the alternating current is relatively close to 0, the alternating current voltage decreases or increases to 0. Within the current range in which the alternating current is relatively close to 0, the power conversion apparatus controls the switching frequency of the switching transistor to first decrease to the first switching frequency, then decrease to the second switching frequency, and finally increase, to ensure that the switching frequency of the switching transistor is less than the maximum switching frequency value within the current range in which the alternating current is relatively close to 0 and a voltage range in which the alternating current voltage vac is relatively close to 0 (including 0), so that the switching frequency of the switching transistor is not limited by a limiter during closed-loop control, thereby helping improve control effect of the power conversion apparatus. In addition, because the switching frequency of the switching transistor is less than the maximum switching frequency value when the alternating current is 0 and the alternating current voltage is 0, distortion of voltage and current waveforms generated due to operating mode switching performed by the power conversion apparatus when the alternating current is 0 and the alternating current voltage is 0 can be reduced, thereby helping improve output performance of the power conversion apparatus.

With reference to the first aspect, in a second possible implementation, the controller is configured to: in the process in which the alternating current of the alternating current end approaches 0, after controlling the switching frequency of the switching transistor to increase to the maximum switching frequency value of the switching transistor, first control the switching frequency of the switching transistor to decrease to a first switching frequency, and then control the switching frequency of the switching transistor to increase to a second switching frequency, where the second switching frequency is less than the maximum switching frequency value.

In this implementation, a switching frequency control manner of the power conversion apparatus is applicable to an application scenario in which the switching frequency increases to the maximum switching frequency value before an absolute value of an alternating current voltage decreases to 0. In the process in which the alternating current approaches or departs from 0, within a current range (including 0) in which the alternating current is relatively close to 0, the alternating current voltage decreases or increases to 0. Within the current range in which the alternating current is relatively close to 0, the power conversion apparatus controls the switching frequency of the switching transistor to first decrease to the first switching frequency, then increase to the second switching frequency, and finally continue to increase, to ensure that the switching frequency of the switching transistor is less than the maximum switching frequency value within the current range in which the alternating current is relatively close to 0 and a voltage range in which the alternating current voltage vac is relatively close to 0 (including 0), so that the switching frequency of the switching transistor is not limited by a limiter during closed-loop control, thereby helping improve control effect of the power conversion apparatus. In addition, because the switching frequency of the switching transistor is less than the maximum switching frequency value when the alternating current is 0 and the alternating current voltage is 0, distortion of voltage and current waveforms generated due to operating mode switching performed by the power conversion apparatus when the alternating current is 0 and the alternating current voltage is 0 can be reduced, thereby helping improve output performance of the power conversion apparatus. Further, because the first switching frequency is less than the second switching frequency in this implementation, when the alternating current voltage is relatively low, the power conversion apparatus may be caused to output a larger alternating current, so that a power factor may be lower and more applicable.

With reference to the first aspect, in a third possible implementation, the controller is configured to: in the process in which the alternating current of the alternating current end approaches 0, after controlling the switching frequency of the switching transistor to increase to the maximum switching frequency value of the switching transistor, first control the switching frequency of the switching transistor to decrease to a first switching frequency, and then control the switching frequency of the switching transistor to remain at the first switching frequency.

In this implementation, a switching frequency control manner of the power conversion apparatus is applicable to an application scenario in which the switching frequency increases to the maximum switching frequency value before an absolute value of an alternating current voltage decreases to 0. In the process in which the alternating current approaches or departs from 0, within a current range (including 0) in which the alternating current is relatively close to 0, the alternating current voltage decreases or increases to 0. Within the current range in which the alternating current is relatively close to 0, the power conversion apparatus controls the switching frequency of the switching transistor to first decrease to the first switching frequency, then remain at the first switching frequency, and finally continue to increase, to ensure that the switching frequency of the switching transistor is less than the maximum switching frequency value within the current range in which the alternating current is relatively close to 0 and a voltage range in which the alternating current voltage vac is relatively close to 0 (including 0), so that the switching frequency of the switching transistor is not limited by a limiter during closed-loop control, thereby helping improve control effect of the power conversion apparatus. In addition, because the switching frequency of the switching transistor is less than the maximum switching frequency value when the alternating current is 0 and the alternating current voltage is 0, distortion of voltage and current waveforms generated due to operating mode switching performed by the power conversion apparatus when the alternating current is 0 and the alternating current voltage is 0 can be reduced, thereby helping improve output performance of the power conversion apparatus. Further, the first switching frequency is the same as the second switching frequency in this implementation, so that a switching frequency control manner of the power conversion apparatus is simple and easy to implement.

With reference to the first aspect, in a fourth possible implementation, the controller is configured to: in the process in which the alternating current of the alternating current end approaches 0, after controlling the switching frequency of the switching transistor to increase to the maximum switching frequency value of the switching transistor, control the switching frequency of the switching transistor to decrease to a second switching frequency.

In this implementation, a switching frequency control manner of the power conversion apparatus is applicable to an application scenario in which the switching frequency increases to the maximum switching frequency value after an absolute value of an alternating current voltage decreases to 0. In the process in which the alternating current approaches or departs from 0, within a current range (including 0) in which the alternating current does not reach but is relatively close to 0, the alternating current voltage has decreased or increased to 0. Within the current range in which the alternating current is relatively close to 0, the power conversion apparatus controls the switching frequency of the switching transistor to first decrease to the second switching frequency and then increase, to ensure that the switching frequency of the switching transistor is less than the maximum switching frequency value within the current range in which the alternating current is relatively close to 0, so that the switching frequency of the switching transistor is not limited by a limiter during closed-loop control, thereby helping improve control effect of the power conversion apparatus. In addition, because the switching frequency of the switching transistor is less than the maximum switching frequency value when the alternating current is 0 and the alternating current voltage is 0, distortion of voltage and current waveforms generated due to operating mode switching performed by the power conversion apparatus when the alternating current is 0 and the alternating current voltage is 0 can be reduced, thereby helping improve output performance of the power conversion apparatus.

With reference to any one of the first possible implementation of the first aspect to the fourth possible implementation of the first aspect, in a fifth possible implementation, the first switching frequency is a switching frequency of the switching transistor when an alternating current voltage of the alternating current end is 0, and the first switching frequency is less than or equal to a first switching frequency threshold. The second switching frequency is a switching frequency of the switching transistor when the alternating current is 0, and the second switching frequency is less than or equal to a second switching frequency threshold.

With reference to the fifth possible implementation of the first aspect, in a sixth possible implementation, the first switching frequency threshold or the second switching frequency threshold is positively correlated with a direct current of the direct current end or an alternating current root-mean-square value of the alternating current end.

In this implementation, the power conversion apparatus may further adjust a value of the first switching frequency threshold or the second switching frequency threshold based on the current direct current of the direct current end or the current alternating current root-mean-square value of the alternating current end, to adjust the first switching frequency or the second switching frequency, thereby ensuring that a current peak and a current loss of an inductor are reduced while control effect and output performance of the power conversion apparatus are improved, so as to improve efficiency of the power conversion apparatus.

With reference to the fifth possible implementation of the first aspect, in a seventh possible implementation, the first switching frequency threshold or the second switching frequency threshold is positively correlated with a power factor of the alternating current end, and the power factor is a cosine value of a phase difference between an alternating current voltage and the alternating current of the alternating current end.

In this implementation, the power conversion apparatus may further adjust a value of the first switching frequency threshold or the second switching frequency threshold based on the current power factor of the alternating current end, to adjust the first switching frequency or the second switching frequency, thereby ensuring that a current peak and a current loss of an inductor are reduced while control effect and output performance of the power conversion apparatus are improved, so as to improve efficiency of the power conversion apparatus.

With reference to the fifth possible implementation of the first aspect, in an eighth possible implementation, the first switching frequency threshold or the second switching frequency threshold is negatively correlated with a direct current voltage of the direct current end, or the first switching frequency threshold or the second switching frequency threshold is positively correlated with an alternating current voltage root-mean-square value of the alternating current end.

In this implementation, the power conversion apparatus may further adjust a value of the first switching frequency threshold or the second switching frequency threshold based on the current direct current voltage of the direct current end or the current alternating current voltage root-mean-square value of the alternating current end, to adjust the first switching frequency or the second switching frequency, thereby ensuring that a current peak and a current loss of an inductor are reduced while control effect and output performance of the power conversion apparatus are improved, so as to improve efficiency of the power conversion apparatus.

With reference to any one of the first aspect to the eighth possible implementation of the first aspect, in a ninth possible implementation, the power conversion apparatus further includes an inductor, and an input end of the direct current side bridge circuit is connected to the direct current end. The inductor and the primary winding are connected in series and then connected to an output end of the direct current side bridge circuit, and the secondary winding is connected to an input end of the alternating current side bridge circuit, or the primary winding is connected to an output end of the direct current side bridge circuit, and the inductor and the secondary winding are connected in series and then connected to an input end of the alternating current side bridge circuit. An output end of the alternating current side bridge circuit is connected to the alternating current end.

In this implementation, the inductor may be connected in series with the primary winding, or may be connected in series with the secondary winding, so that the power conversion apparatus has various structures and high flexibility.

With reference to the ninth possible implementation of the first aspect, in a tenth possible implementation, the direct current side bridge circuit includes a half-bridge circuit or a full-bridge circuit, and the alternating current side bridge circuit includes a half-bridge circuit or a full-bridge circuit.

In this implementation, either of the direct current side bridge circuit and the alternating current side bridge circuit may be a full-bridge circuit or a half-bridge circuit, so that the power conversion apparatus has various structures and high flexibility.

With reference to the tenth possible implementation of the first aspect, in an eleventh possible implementation, the direct current side bridge circuit is the half-bridge circuit, and the power conversion apparatus further includes a first resonant capacitor and a second resonant capacitor, where the first resonant capacitor and the second resonant capacitor are connected in series and then connected in parallel with the input end of the direct current side bridge circuit. The primary winding is connected to the output end of the direct current side bridge circuit and a capacitor midpoint, or the primary winding and the inductor are connected in series between the output end of the direct current side bridge circuit and a capacitor midpoint, and the capacitor midpoint is a joint between the first resonant capacitor and the second resonant capacitor.

In this implementation, the first resonant capacitor, the second resonant capacitor, and the inductor form a resonant circuit, so that the power conversion apparatus is a resonant power conversion apparatus, and a current waveform of the inductor tends to become sinusoidal. This helps reduce a peak of a current flowing through the switching transistor in the power conversion apparatus, and helps the switching transistor in the power conversion apparatus implement soft switching, to reduce a loss of the switching transistor, thereby improving efficiency of the power conversion apparatus.

With reference to the tenth possible implementation of the first aspect, in a twelfth possible implementation, the alternating current side bridge circuit is the half-bridge circuit, and the power conversion apparatus further includes a first resonant capacitor and a second resonant capacitor, where the first resonant capacitor and the second resonant capacitor are connected in series and then connected in parallel with the output end of the alternating current side bridge circuit. The secondary winding is connected to the input end of the alternating current side bridge circuit and a capacitor midpoint, or the secondary winding and the inductor are connected in series between the input end of the alternating current side bridge circuit and a capacitor midpoint, and the capacitor midpoint is a joint between the first resonant capacitor and the second resonant capacitor.

In this implementation, the first resonant capacitor, the second resonant capacitor, and the inductor form a resonant circuit, so that the power conversion apparatus is a resonant power conversion apparatus, and a current waveform of the inductor tends to become sinusoidal. This helps reduce a peak of a current flowing through the switching transistor in the power conversion apparatus, and helps the switching transistor in the power conversion apparatus implement soft switching, to reduce a loss of the switching transistor, thereby improving efficiency of the power conversion apparatus.

With reference to the tenth possible implementation of the first aspect, in a thirteenth possible implementation, both the direct current side bridge circuit and the alternating current side bridge circuit are full-bridge circuits, the power conversion apparatus further includes a first resonant capacitor, and the primary winding and the first resonant capacitor are connected in series with the output end of the direct current side bridge circuit, or the secondary winding, the inductor, and the first resonant capacitor are connected in series with the input end of the alternating current side bridge circuit, or the primary winding, the inductor, and the first resonant capacitor are connected in series with the output end of the direct current side bridge circuit, or the secondary winding and the first resonant capacitor are connected in series with the input end of the alternating current side bridge circuit.

In this implementation, the first resonant capacitor and the inductor form a resonant circuit, so that the power conversion apparatus is a resonant power conversion apparatus, and a current waveform of the inductor tends to become sinusoidal. This helps reduce a peak of a current flowing through the switching transistor in the power conversion apparatus, and helps the switching transistor in the power conversion apparatus implement soft switching, to reduce a loss of the switching transistor, thereby improving efficiency of the power conversion apparatus.

According to a second aspect, this application provides a control method for a power conversion apparatus. The method includes: in a process in which an alternating current of an alternating current end approaches 0, first controlling a switching frequency of a switching transistor to increase to a maximum switching frequency value of the switching transistor; and then controlling the switching frequency of the switching transistor to be less than the maximum switching frequency value when the alternating current is 0; and in a process in which the alternating current of the alternating current end departs from 0, first controlling the switching frequency of the switching transistor to increase to the maximum switching frequency value of the switching transistor, and then controlling the switching frequency of the switching transistor to decrease. The method is applicable to the power conversion apparatus, the power conversion apparatus includes a direct current end, a direct current side bridge circuit, a transformer, an alternating current side bridge circuit, and the alternating current end, the transformer includes a primary winding and a secondary winding, the direct current side bridge circuit is connected between the direct current end and the primary winding, and the alternating current side bridge circuit is connected between the secondary winding and the alternating current end.

With reference to the second aspect, in a first possible implementation, in the process in which the alternating current of the alternating current end approaches 0, after controlling the switching frequency of the switching transistor to increase to the maximum switching frequency value of the switching transistor, the power conversion apparatus first controls the switching frequency of the switching transistor to decrease to a first switching frequency, and then controls the switching frequency of the switching transistor to decrease to a second switching frequency.

With reference to the second aspect, in a second possible implementation, in the process in which the alternating current of the alternating current end approaches 0, after controlling the switching frequency of the switching transistor to increase to the maximum switching frequency value of the switching transistor, the power conversion apparatus first controls the switching frequency of the switching transistor to decrease to a first switching frequency, and then controls the switching frequency of the switching transistor to increase to a second switching frequency, where the second switching frequency is less than the maximum switching frequency value.

With reference to the second aspect, in a third possible implementation, in the process in which the alternating current of the alternating current end approaches 0, after controlling the switching frequency of the switching transistor to increase to the maximum switching frequency value of the switching transistor, the power conversion apparatus first controls the switching frequency of the switching transistor to decrease to a first switching frequency, and then controls the switching frequency of the switching transistor to remain at the first switching frequency.

With reference to the second aspect, in a fourth possible implementation, in the process in which the alternating current of the alternating current end approaches 0, after controlling the switching frequency of the switching transistor to increase to the maximum switching frequency value of the switching transistor, the power conversion apparatus controls the switching frequency of the switching transistor to decrease to a second switching frequency.

With reference to any one of the first possible implementation of the second aspect to the fourth possible implementation of the second aspect, in a fifth possible implementation, the first switching frequency is a switching frequency of the switching transistor when an alternating current voltage of the alternating current end is 0, and the first switching frequency is less than or equal to a first switching frequency threshold. The second switching frequency is a switching frequency of the switching transistor when the alternating current is 0, and the second switching frequency is less than or equal to a second switching frequency threshold.

With reference to the fifth possible implementation of the second aspect, in a sixth possible implementation, the first switching frequency threshold or the second switching frequency threshold is positively correlated with a direct current of the direct current end or an alternating current root-mean-square value of the alternating current end.

With reference to the fifth possible implementation of the second aspect, in a seventh possible implementation, the first switching frequency threshold or the second switching frequency threshold is positively correlated with a power factor of the alternating current end, and the power factor is a cosine value of a phase difference between an alternating current voltage and the alternating current of the alternating current end.

With reference to the fifth possible implementation of the second aspect, in an eighth possible implementation, the first switching frequency threshold or the second switching frequency threshold is negatively correlated with a direct current voltage of the direct current end, or the first switching frequency threshold or the second switching frequency threshold is positively correlated with an alternating current voltage root-mean-square value of the alternating current end.

With reference to any one of the second aspect to the eighth possible implementation of the second aspect, in a ninth possible implementation, the power conversion apparatus further includes an inductor, and an input end of the direct current side bridge circuit is connected to the direct current end. The inductor and the primary winding are connected in series and then connected to an output end of the direct current side bridge circuit, and the secondary winding is connected to an input end of the alternating current side bridge circuit, or the primary winding is connected to an output end of the direct current side bridge circuit, and the inductor and the secondary winding are connected in series and then connected to an input end of the alternating current side bridge circuit. An output end of the alternating current side bridge circuit is connected to the alternating current end.

With reference to the ninth possible implementation of the second aspect, in a tenth possible implementation, the direct current side bridge circuit includes a half-bridge circuit or a full-bridge circuit, and the alternating current side bridge circuit includes a half-bridge circuit or a full-bridge circuit.

With reference to the tenth possible implementation of the second aspect, in an eleventh possible implementation, the direct current side bridge circuit is the half-bridge circuit, and the power conversion apparatus further includes a first resonant capacitor and a second resonant capacitor, where the first resonant capacitor and the second resonant capacitor are connected in series and then connected in parallel with the input end of the direct current side bridge circuit. The primary winding is connected to the output end of the direct current side bridge circuit and a capacitor midpoint, or the primary winding and the inductor are connected in series between the output end of the direct current side bridge circuit and a capacitor midpoint, and the capacitor midpoint is a joint between the first resonant capacitor and the second resonant capacitor.

With reference to the tenth possible implementation of the second aspect, in a twelfth possible implementation, the alternating current side bridge circuit is the half-bridge circuit, and the power conversion apparatus further includes a first resonant capacitor and a second resonant capacitor, where the first resonant capacitor and the second resonant capacitor are connected in series and then connected in parallel with the output end of the alternating current side bridge circuit. The secondary winding is connected to the input end of the alternating current side bridge circuit and a capacitor midpoint, or the secondary winding and the inductor are connected in series between the input end of the alternating current side bridge circuit and a capacitor midpoint, and the capacitor midpoint is a joint between the first resonant capacitor and the second resonant capacitor.

With reference to the tenth possible implementation of the second aspect, in a thirteenth possible implementation, both the direct current side bridge circuit and the alternating current side bridge circuit are full-bridge circuits, the power conversion apparatus further includes a first resonant capacitor, and the primary winding and the first resonant capacitor are connected in series with the output end of the direct current side bridge circuit, or the secondary winding, the inductor, and the first resonant capacitor are connected in series with the input end of the alternating current side bridge circuit, or the primary winding, the inductor, and the first resonant capacitor are connected in series with the output end of the direct current side bridge circuit, or the secondary winding and the first resonant capacitor are connected in series with the input end of the alternating current side bridge circuit.

It should be understood that mutual reference may be made to the implementations and beneficial effects of the foregoing plurality of aspects of this application.

### BRIEF DESCRIPTION OF DRAWINGS

FIG. 1a is a diagram of a structure of a DAB converter according to the conventional technology;
FIG. 1b is a diagram of a switching frequency waveform of a switching transistor in a DAB converter according to the conventional technology;
FIG. 2 is a diagram of an application scenario of a power conversion apparatus according to this application;
FIG. 3a is a diagram of a structure of a power conversion apparatus according to this application;
FIG. 3b is a diagram of another structure of a power conversion apparatus according to this application;
FIG. 4 is a diagram of another structure of a power conversion apparatus according to this application;
FIG. 5 is a diagram of a switching frequency waveform of a switching transistor in a power conversion apparatus according to this application;
FIG. 6 is a diagram of another switching frequency waveform of a switching transistor in a power conversion apparatus according to this application;
FIG. 7 is a diagram of another switching frequency waveform of a switching transistor in a power conversion apparatus according to this application;
FIG. 8 is a diagram of another switching frequency waveform of a switching transistor in a power conversion apparatus according to this application;
FIG. 9a is a diagram of another structure of a power conversion apparatus according to this application;
FIG. 9b is a diagram of another structure of a power conversion apparatus according to this application;
FIG. 9c is a diagram of another structure of a power conversion apparatus according to this application;
FIG. 9d is a diagram of another structure of a power conversion apparatus according to this application;
FIG. 10a is a diagram of another structure of a power conversion apparatus according to this application;
FIG. 10b is a diagram of another structure of a power conversion apparatus according to this application;
FIG. 11 is a diagram of another structure of a power conversion apparatus according to this application; and
FIG. 12 is a schematic flowchart of a control method for a power conversion apparatus according to this application.

### DESCRIPTION OF EMBODIMENTS

A power conversion apparatus provided in this application is applicable to a plurality of application fields such as the energy storage and power generation field, the photovoltaic power generation field, the new energy smart microgrid field, and the power transmission and distribution field. The power conversion apparatus provided in this application may be an inverter, a power conversion system (Power Conversion System, PCS), an uninterruptible power supply (Uninterrupted Power Supply, UPS), or the like, and is applicable to different application scenarios, for example, a photovoltaic power supply scenario, an energy storage power supply scenario, a photovoltaic energy storage hybrid power supply scenario, and a UPS power supply scenario. The following uses the photovoltaic power supply scenario as an example for description.

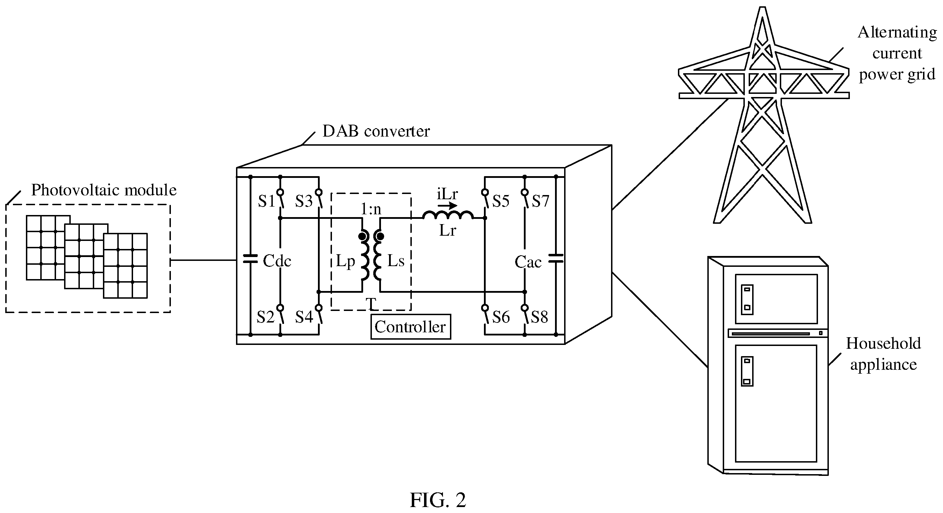

Refer to FIG. 2. FIG. 2 is a diagram of an application scenario of a power conversion apparatus according to this application. In a photovoltaic power supply scenario, the power conversion apparatus provided in this application is a DAB converter shown in FIG. 2. The DAB converter includes a direct current end, a direct current side bridge circuit, a transformer T, an inductor Lr, an alternating current side bridge circuit, a controller, and an alternating current end. The transformer T includes a primary winding Lp and a secondary winding Ls. The direct current side bridge circuit and the alternating current side bridge circuit include full-bridge circuits or half-bridge circuits. Herein, an example in which both the direct current side bridge circuit and the alternating current side bridge circuit are full-bridge circuits is used for description. For example, the direct current side bridge circuit includes a first bridge arm and a second bridge arm that are connected in parallel, and the alternating current side bridge circuit includes a third bridge arm and a fourth bridge arm that are connected in parallel. The direct current end of the DAB converter is connected to a photovoltaic module, and the alternating current end is connected to an alternating current power grid or a household appliance. The first bridge arm includes a switch S1 and a switch S2 that are connected in series, the second bridge arm includes a switch S3 and a switch S4 that are connected in series, the third bridge arm includes a switch S5 and a switch S6 that are connected in series, and the fourth bridge arm includes a switch S7 and a switch S8 that are connected in series. The switch S1 to the switch S8 may be controllable switching transistors. The first bridge arm and the second bridge arm are connected in parallel with the direct current end of the DAB converter, and the third bridge arm and the fourth bridge arm are connected in parallel with the alternating current end of the DAB converter. Two ends of the primary winding Lp are respectively connected to a midpoint of the first bridge arm and a midpoint of the second bridge arm. The inductor Lr and the secondary winding Ls are connected in series between a midpoint of the third bridge arm and a midpoint of the fourth bridge arm.

After the DAB converter starts to run, the controller adjusts switching frequencies of switching transistors in the four bridge arms, a phase difference between a phase of the switch S1 and a phase of the switch S4 or a phase difference between a phase of the switch S2 and a phase of the switch S3, a phase difference between a phase of the switch S5 and a phase of the switch S8 or a phase difference between a phase of the switch S6 and a phase of the switch S5, and a phase difference between a phase of any switch in the first bridge arm and a phase of any switch in the third bridge arm, to invert a direct current of the direct current end of the DAB converter into an alternating current, so as to supply power to a plurality of types of power-consuming devices such as the alternating current power grid or a load. Meanwhile, in a process in which an alternating current of the alternating current end of the DAB converter approaches 0, the controller first controls the switching frequencies of the switching transistors in the four bridge arms to increase to maximum switching frequency value of the switching transistor, and then controls the switching frequencies of the switching transistors in the four bridge arms to be less than the maximum switching frequency value when the alternating current is 0. In a process in which the alternating current of the alternating current end of the DAB converter departs from 0, the controller further first controls the switching frequencies of the switching transistors in the four bridge arms to increase to the maximum switching frequency value of the switching transistor, and then controls the switching frequencies of the switching transistors in the four bridge arms to decrease.

It may be understood that, in the process in which the alternating current of the alternating current end of the DAB converter approaches or departs from 0, within a current range (including 0) in which the alternating current of the alternating current end is relatively close to 0, the DAB converter controls the switching frequency of the switching transistor to be less than the maximum switching frequency value, so that the switching frequency of the switching transistor is not limited by a limiter during closed-loop control, thereby helping improve control effect of the DAB converter. In addition, because the switching frequency of the switching transistor is less than the maximum switching frequency value when the alternating current of the alternating current end of the DAB converter is 0, distortion of voltage and current waveforms generated due to operating mode switching performed by the DAB converter when the alternating current of the alternating current end is 0 can be reduced, thereby helping improve output performance of the DAB converter. Further, in the process in which the alternating current of the alternating current end of the DAB converter approaches or departs from 0, within a current range in which the alternating current of the alternating current end is relatively far away from 0, the DAB converter controls the switching frequencies of the switching transistors in the four bridge arms according to a principle of negative correlation between an absolute value of an alternating current and an optimal switching frequency of a switching transistor, to reduce a current peak and a current loss of the inductor Lr, thereby improving efficiency of the DAB converter.

The foregoing is merely an example of the application scenario of the power conversion apparatus provided in this application, but is not exhaustive. The application scenario is not limited in this application.

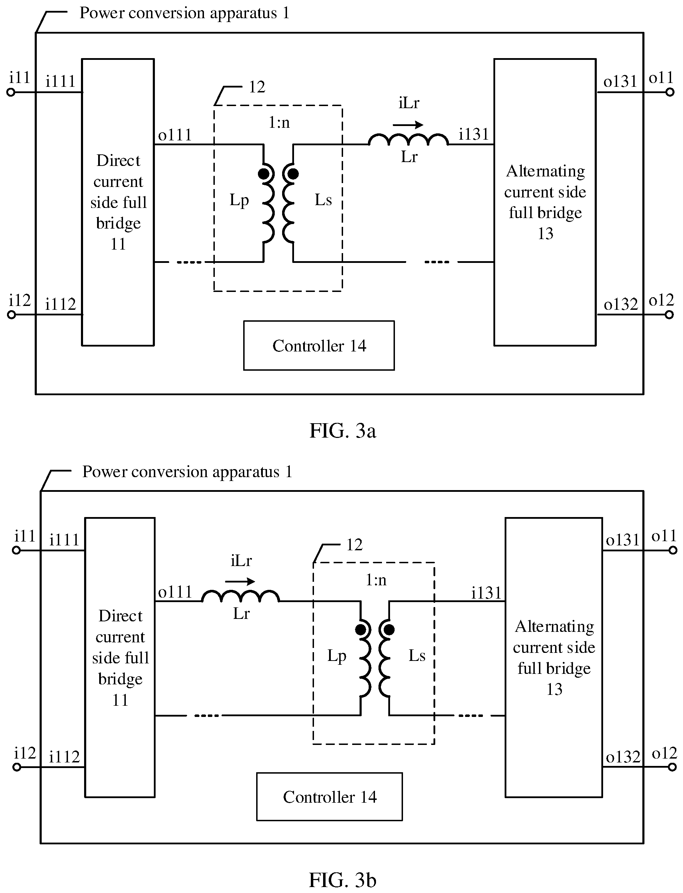

With reference to FIG. 3a to FIG. 11, the following illustrates an operating principle of the power conversion apparatus provided in this application.

Refer to FIG. 3a. FIG. 3a is a diagram of a structure of a power conversion apparatus according to this application. As shown in FIG. 3a, the power conversion apparatus 1 includes direct current ends, a direct current side bridge circuit 11, a transformer 12, an alternating current side bridge circuit 13, a controller 14, and alternating current ends. The transformer 12 includes a primary winding Lp and a secondary winding Ls. The direct current side bridge circuit 11 and the alternating current side bridge circuit 13 include switching transistors. The direct current ends of the power conversion apparatus 1 include a first direct current end i11 and a second direct current end i12, and the first direct current end i11 and the second direct current end i12 are configured to respectively connect to a positive electrode and a negative electrode of a direct current power supply. The direct current power supply includes a photovoltaic module or a battery cluster. The alternating current ends of the power conversion apparatus 1 include a first alternating current end o11 and a second alternating current end o12, and the first alternating current end o11 and the second alternating current end o12 are configured to connect to an alternating current power grid. The direct current side bridge circuit 11 is connected between the direct current ends and the primary winding Lp. Specifically, an input end i111 and an input end i112 of the direct current side bridge circuit 11 are respectively connected to the first direct current end i11 and the second direct current end i12, and an output end o111 of the direct current side bridge circuit 11 is connected to the primary winding Lp. The alternating current side bridge circuit 13 is connected between the secondary winding Ls and the alternating current ends. Specifically, an input end i131 of the alternating current side bridge circuit 13 is connected to the secondary winding Ls, and an output end o131 and an output end o132 of the alternating current side bridge circuit 13 are respectively connected to the first alternating current end o11 and the second alternating current end o12 of the power conversion apparatus 1. The direct current side bridge circuit 11 includes a full-bridge circuit or a half-bridge circuit, and the alternating current side bridge circuit 13 includes a full-bridge circuit or a half-bridge circuit. The switching transistors in the direct current side bridge circuit 11 and the alternating current side bridge circuit 13 may be controllable switching transistors, such as metal-oxide-semiconductor field-effect transistors (Metal-Oxide-Semiconductor Field-Effect Transistor, MOSFET), bipolar junction transistors (Bipolar Junction Transistor, BJT), or insulated gate bipolar transistors (Insulated Gate Bipolar Transistor, IGBT).

The power conversion apparatus 1 further includes an inductor Lr, and the inductor Lr and the secondary winding Ls are connected in series and then connected to the input end i131 of the alternating current side bridge circuit 13. Optionally, the inductor Lr may be alternatively connected to the primary winding Lp in series. For details, refer to the power conversion apparatus 1 shown in FIG. 3b. As shown in FIG. 3b, the inductor Lr and the primary winding Lp are connected in series and then connected to the output end o111 of the direct current side bridge circuit 11, and the secondary winding Ls is connected to the input end i131 of the alternating current side bridge circuit 13.

In an implementation, after the power conversion apparatus 1 operates, the controller 14 starts to detect an alternating current of the alternating current end of the power conversion apparatus 1. In a process in which the alternating current of the alternating current end of the power conversion apparatus 1 approaches 0, the controller 14 first controls switching frequencies of the switching transistors in the direct current side bridge circuit 11 and the alternating current side bridge circuit 13 to increase to maximum switching frequency value of the switching transistor, and then controls the switching frequencies of the switching transistors in the direct current side bridge circuit 11 and the alternating current side bridge circuit 13 to be less than the maximum switching frequency value when the alternating current of the alternating current end of the power conversion apparatus 1 is 0. In addition, in a process in which the alternating current of the alternating current end of the power conversion apparatus 1 departs from 0, the controller 14 first controls the switching frequencies of the switching transistors in the direct current side bridge circuit 11 and the alternating current side bridge circuit 13 to increase to the maximum switching frequency value of the switching transistor, and then controls the switching frequencies of the switching transistors in the direct current side bridge circuit 11 and the alternating current side bridge circuit 13 to decrease. The maximum switching frequency value may be a maximum operating frequency of the transformer 12, and switching frequencies of all switching transistors in the direct current side bridge circuit 11 and the alternating current side bridge circuit 13 are the same.

In this embodiment of this application, in the process in which the alternating current of the alternating current end of the power conversion apparatus 1 approaches or departs from 0, within a current range (including 0) in which the alternating current of the alternating current end is relatively close to 0, the power conversion apparatus 1 controls the switching frequencies of the switching transistors in the direct current side bridge circuit 11 and the alternating current side bridge circuit 13 to be less than the maximum switching frequency value, so that the switching frequencies of the switching transistors are not limited by a limiter during closed-loop control, thereby helping improve control effect of the power conversion apparatus 1. In addition, because the switching frequency of the switching transistor is less than the maximum switching frequency value when the alternating current of the alternating current end of the power conversion apparatus 1 is 0, distortion of voltage and current waveforms generated due to operating mode switching performed by the power conversion apparatus 1 when the alternating current of the alternating current end is 0 can be reduced, thereby helping improve output performance of the power conversion apparatus 1. Further, in the process in which the alternating current of the alternating current end of the power conversion apparatus 1 approaches or departs from 0, within a current range in which the alternating current of the alternating current end is relatively far away from 0, the power conversion apparatus 1 controls the switching frequencies of the switching transistors according to a principle of negative correlation between an absolute value of an alternating current and an optimal switching frequency of a switching transistor, to reduce a current peak and a current loss of the inductor Lr, thereby improving efficiency of the power conversion apparatus 1.

Regardless of whether the inductor Lr in the power conversion apparatus 1 is connected in series with the primary winding Lp or the secondary winding Ls, the power conversion apparatus 1 controls the switching frequency of the switching transistor in the same manner. Therefore, for ease of description, the following describes an operating principle of the power conversion apparatus 1 by using an example in which the inductor Lr is connected in series with the secondary winding Ls.

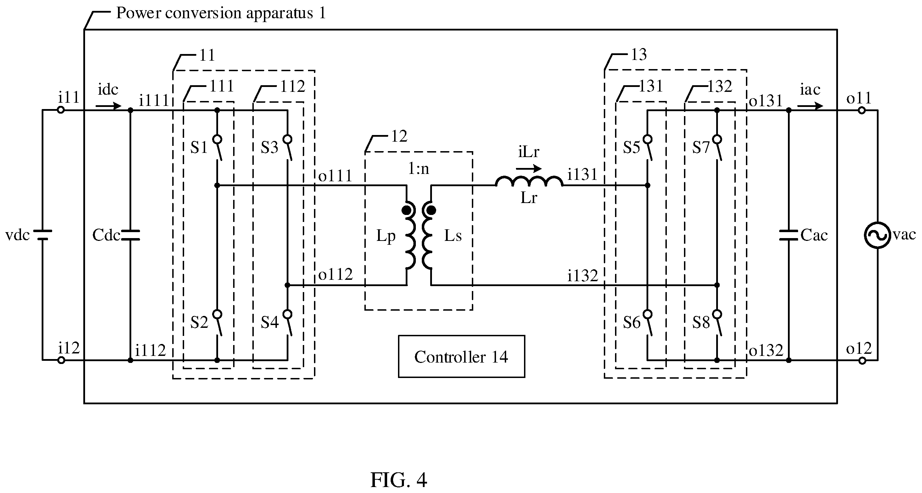

For example, refer to FIG. 4. FIG. 4 is a diagram of another structure of a power conversion apparatus according to this application. As shown in FIG. 4, compared with those in the power conversion apparatus 1 shown in FIG. 3a, both the direct current side bridge circuit 11 and the alternating current side bridge circuit 13 in the power conversion apparatus 1 shown in FIG. 4 are full-bridge circuits. Specifically, as shown in FIG. 4, the direct current side bridge circuit 11 includes a bridge arm 111 and a bridge arm 112 that are connected in parallel, and the alternating current side bridge circuit 13 includes a bridge arm 131 and a bridge arm 132 that are connected in parallel. The bridge arm 111 includes a switching transistor S1 and a switching transistor S2 that are connected in series, the bridge arm 112 includes a switching transistor S3 and a switching transistor S4 that are connected in series, the bridge arm 131 includes a switching transistor S5 and a switching transistor S6 that are connected in series, and the bridge arm 132 includes a switching transistor S7 and a switching transistor S8 that are connected in series. The input end i111 and the input end i112 of the direct current side bridge circuit 11 are two ends of the bridge arm 111 respectively, and the output end o111 (that is, a midpoint of the bridge arm 111) and the output end o112 (that is, a midpoint of the bridge arm 112) of the direct current side bridge circuit 11 are respectively connected to a dotted terminal and an undotted terminal of the primary winding Lp. The secondary winding Ls and the inductor Lr are connected in series and then connected between the input ends of the alternating current side bridge circuit 13. Specifically, the secondary winding Ls and the inductor Lr are connected in series between the input end i131 (that is, a midpoint of the bridge arm 131) and the input end i132 (that is, a midpoint of the bridge arm 132) of the alternating current side bridge circuit 13. The output end o131 and the output end o132 of the alternating current side bridge circuit 13 are two ends of the bridge arm 131 respectively. A midpoint of any bridge arm in the foregoing four bridge arms is a joint of two switching transistors in the bridge arm. Optionally, the power conversion apparatus 1 further includes an input capacitor Cdc and an output capacitor Cac. The input capacitor Cdc is connected between the first direct current end i11 and the second direct current end i12 of the power conversion apparatus 1, and the output capacitor Cac is connected between the first alternating current end o11 and the second alternating current end o12 of the power conversion apparatus 1.

After the power conversion apparatus 1 operates, the controller 14 adjusts a switching frequency of a switching transistor in each bridge arm, a phase difference between a phase of the switching transistor S1 and a phase of the switching transistor S4 or a phase difference between a phase of the switching transistor S2 and a phase of the switching transistor S3, a phase difference between a phase of the switching transistor S5 and a phase of the switching transistor S8 or a phase difference between a phase of the switching transistor S6 and a phase of the switching transistor S7, and a phase difference between a phase of any switching transistor in the bridge arm 111 and a phase of any switching transistor in the bridge arm 131, to control output power of the power conversion apparatus 1. Meanwhile, the controller 14 detects an alternating current iac of the alternating current end of the power conversion apparatus 1. In addition, in a process in which the alternating current iac approaches 0, the controller 14 first controls a switching frequency of each switching transistor in the foregoing four bridge arms to increase to a maximum switching frequency value of the switching transistor, and then controls the switching frequency of each switching transistor in the foregoing four bridge arms to be less than the maximum switching frequency value when the alternating current iac is 0. In addition, in a process in which the alternating current iac departs from 0, the controller 14 first controls the switching frequency of each switching transistor in the foregoing four bridge arms to increase to the maximum switching frequency value of the switching transistor, and then controls the switching frequency of each switching transistor in the foregoing four bridge arms to decrease.

In an implementation, before an absolute value of an alternating current voltage vac and an absolute value of the alternating current iac of the alternating current end of the power conversion apparatus 1 decrease to 0, a switching frequency of any switching transistor in the foregoing four bridge arms increases to a maximum switching frequency value.

In an optional embodiment, before controlling the output power of the power conversion apparatus 1, the controller 14 determines, based on a preset mapping relationship between a power factor PF of the alternating current end and both a first switching frequency threshold and a second switching frequency threshold, values of the first switching frequency threshold and the second switching frequency threshold when the power factor PF of the alternating current end of the power conversion apparatus 1 is a preset power factor. The power factor PF of the alternating current end is a cosine of a phase difference between the alternating current voltage vac and the alternating current iac. A smaller absolute value of the power factor PF of the alternating current end indicates a larger instantaneous absolute value of the alternating current voltage vac when the alternating current iac crosses zero, and a larger instantaneous absolute value of the alternating current iac when the alternating current voltage vac crosses zero. Therefore, in this case, a switching frequency limit value (that is, the first switching frequency threshold) when the alternating current iac crosses zero is smaller, and a switching frequency limit value (that is, the second switching frequency threshold) when the alternating current voltage vac crosses zero is smaller. Based on this, the preset mapping relationship between the power factor PF of the alternating current end and both the first switching frequency threshold and the second switching frequency threshold is that both the first switching frequency threshold and the second switching frequency threshold are positively correlated with the power factor PF of the alternating current end.

Then, the controller 14 adjusts a phase difference between a phase of the switching transistor S1 and a phase of the switching transistor S4 or a phase difference between a phase of the switching transistor S2 and a phase of the switching transistor S3, a phase difference between a phase of the switching transistor S5 and a phase of the switching transistor S8 or a phase difference between a phase of the switching transistor S6 and a phase of the switching transistor S7, and a phase difference between a phase of any switching transistor in the bridge arm 111 and a phase of any switching transistor in the bridge arm 131, and adjusts a switching frequency of a switching transistor in each bridge arm, to control output power of the power conversion apparatus 1, and make the power factor PF of the alternating current end be the preset power factor. Meanwhile, the controller 14 detects the alternating current iac. In a process in which the alternating current iac approaches 0, the controller 14 first controls the switching frequency of each switching transistor in the foregoing four bridge arms to increase to the maximum switching frequency value of the switching transistor. After controlling the switching frequency of each switching transistor to increase to the maximum switching frequency value of the switching transistor, the controller 14 first controls the switching frequency of each switching transistor to decrease to a first switching frequency, and then controls the switching frequency of each switching transistor to decrease to a second switching frequency. In addition, in a process in which the alternating current iac departs from 0, the controller 14 first controls the switching frequency of each switching transistor to start increasing from the second switching frequency to the maximum switching frequency value of the switching transistor, and then controls the switching frequency of each switching transistor to decrease.

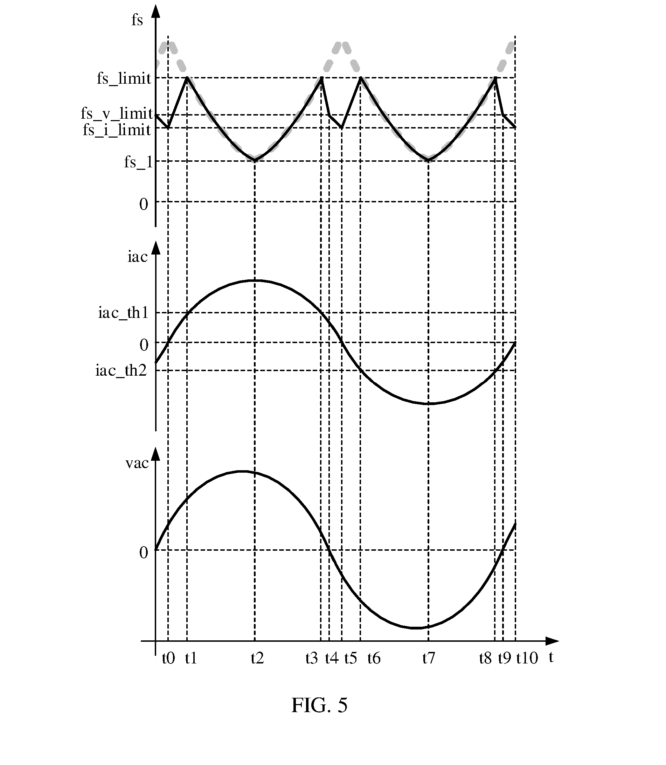

The first switching frequency is a switching frequency of each switching transistor when the alternating current voltage vac is 0, and the first switching frequency is less than or equal to the first switching frequency threshold. The second switching frequency is a switching frequency of each switching transistor when the alternating current iac is 0, and the second switching frequency is less than or equal to the second switching frequency threshold. For ease of understanding, with reference to a diagram of a switching frequency waveform of a switching transistor shown in FIG. 5, the following specifically describes this embodiment by using an example in which the first switching frequency is the first switching frequency threshold and the second switching frequency is the second switching frequency threshold. As shown in FIG. 5, in a time period from t0 to t1 within an operating period T (that is, a time period from t0 to t7) of the alternating current iac, the alternating current iac starts to continuously increase from 0, that is, the alternating current iac gradually departs from 0. In this case, the controller 14 controls the switching frequency fs of each switching transistor to start increasing from the second switching frequency threshold fs_i_limit.

At the moment t1, the controller 14 controls the switching frequency fs of each switching transistor to increase to the maximum switching frequency value fs_limit of the switching transistor.

In a time period from t1 to t2, the alternating current iac continues to increase, that is, the alternating current iac continues to gradually depart from 0. The controller 14 controls, according to a principle of negative correlation between an absolute value of the alternating current iac and an optimal switching frequency of the switching transistor sought by the power conversion apparatus 1, the switching frequency fs of each switching transistor to start decreasing from the maximum switching frequency value fs_limit.

At the moment t2, the alternating current iac reaches a maximum value, and the controller 14 controls, according to the principle of negative correlation between an absolute value of the alternating current iac and an optimal switching frequency of the switching transistor sought by the power conversion apparatus 1, the switching frequency fs of each switching transistor to decrease to a switching frequency fs_1.

In a time period from t2 to t3, the alternating current iac starts to continuously decrease, that is, the alternating current iac starts to approach 0. In this case, the controller 14 controls, according to the principle of negative correlation between an absolute value of the alternating current iac and an optimal switching frequency of the switching transistor sought by the power conversion apparatus 1, the switching frequency fs of each switching transistor to start gradually increasing from the switching frequency fs_1.

At the moment t3, the controller 14 controls, according to the principle of negative correlation between an absolute value of the alternating current iac and an optimal switching frequency of the switching transistor sought by the power conversion apparatus 1, the switching frequency fs of each switching transistor to increase to the maximum switching frequency value fs_limit of the switching transistor.

In a time period from t3 to t4, the alternating current iac continues to decrease, that is, the alternating current iac continues to approach 0. The controller 14 no longer follows the principle of negative correlation between an absolute value of the alternating current iac and an optimal switching frequency of the switching transistor sought by the power conversion apparatus 1, but controls the switching frequency fs of each switching transistor to start decreasing from the maximum switching frequency value fs_limit.

At the moment t4, the alternating current voltage vac decreases to 0, and the controller 14 controls the switching frequency fs of each switching transistor to decrease to the first switching frequency threshold fs_v_limit.

In a time period from t4 to t5, the alternating current iac continues to decrease, that is, the alternating current iac continues to approach 0, and the controller 14 controls the switching frequency fs of each switching transistor to continue decreasing from the first switching frequency threshold fs_v_limit.

At the moment t5, the alternating current iac decreases to 0, and the controller 14 controls the switching frequency fs of each switching transistor to decrease to the second switching frequency threshold fs_i_limit.

In a time period from t5 to t6, the alternating current iac starts to continuously decrease from 0, that is, the alternating current iac gradually departs from 0. In this case, the controller 14 controls the switching frequency fs of each switching transistor to start increasing from the second switching frequency threshold fs_i_limit.

At the moment t6, the controller 14 controls the switching frequency fs of each switching transistor to increase to the maximum switching frequency value fs_limit.

In a time period from t6 to t7, the alternating current iac continues to decrease, that is, the alternating current iac continues to gradually depart from 0. The controller 14 controls, according to the principle of negative correlation between an absolute value of the alternating current iac and an optimal switching frequency of the switching transistor sought by the power conversion apparatus 1, the switching frequency fs of each switching transistor to start decreasing from the maximum switching frequency value fs_limit.

At the moment t7, the controller 14 controls, according to the principle of negative correlation between an absolute value of the alternating current iac and an optimal switching frequency of the switching transistor sought by the power conversion apparatus 1, the switching frequency fs of each switching transistor to decrease to the switching frequency fs_1.

In a time period from t7 to t8, the alternating current iac starts to continuously increase from 0, that is, the alternating current iac starts to approach 0. In this case, the controller 14 controls, according to the principle of negative correlation between an absolute value of the alternating current iac and an optimal switching frequency of the switching transistor sought by the power conversion apparatus 1, the switching frequency fs of each switching transistor to start increasing from the switching frequency fs_1.

At the moment t8, the controller 14 controls the switching frequency fs of each switching transistor to increase to the maximum switching frequency value fs_limit.

In a time period from t8 to t9, the alternating current iac continues to increase, that is, the alternating current iac continues to approach 0. The controller 14 no longer follows the principle of negative correlation between an absolute value of the alternating current iac and an optimal switching frequency of the switching transistor sought by the power conversion apparatus 1, but controls the switching frequency fs of each switching transistor to start decreasing from the maximum switching frequency value fs_limit.

At the moment t9, the alternating current voltage vac increases to 0, and the controller 14 controls the switching frequency fs of each switching transistor to decrease to the first switching frequency threshold fs_v_limit.

In a time period from t9 to t10, the alternating current iac continues to increase, that is, the alternating current iac continues to approach 0, and the controller 14 controls the switching frequency fs of each switching transistor to continue decreasing from the first switching frequency threshold fs_v_limit.

At the moment t10, the alternating current iac increases to 0, and the controller 14 controls the switching frequency fs of each switching transistor to decrease to the second switching frequency threshold fs_i_limit.

It should be noted that, to ensure that efficiency of the power conversion apparatus 1 is improved while control effect of the power conversion apparatus 1 and output performance of the power conversion apparatus 1 are improved, the controller 14 may further adjust values of the first switching frequency threshold fs_v_limit and the second switching frequency threshold fs_i_limit based on a change in the power factor PF of the alternating current end. Specifically, the controller 14 may detect the current power factor PF of the alternating current end based on a preset frequency (for example, an integer multiple of an alternating current frequency of the alternating current iac), and adjust the first switching frequency threshold fs_v_limit and the second switching frequency threshold fs_i_limit based on the current power factor PF of the alternating current end, so that both the first switching frequency threshold fs_v_limit and the second switching frequency threshold fs_i_limit are positively correlated with the power factor PF of the alternating current end. In other words, both the first switching frequency threshold fs_v_limit and the second switching frequency threshold fs_i_limit increase or decrease as the power factor PF of the alternating current end increases or decreases.

In addition, for this embodiment, without a limitation that the first switching frequency is less than or equal to the first switching frequency threshold and the second switching frequency is less than or equal to the second switching frequency threshold, the controller 14 can still make the switching frequency of each switching transistor less than the maximum switching frequency value within a current range (corresponding to the current range (iac_th2, iac_th1) in FIG. 5) in which the alternating current iac is relatively close to 0.

It may be understood that, in the process in which the alternating current iac approaches or departs from 0, within the current range in which the alternating current iac is relatively close to 0, the power conversion apparatus 1 controls the switching frequency fs of each switching transistor to first decrease to the first switching frequency, then decrease to the second switching frequency, and finally increase, to ensure that the switching frequency fs of each switching transistor is less than the maximum switching frequency value within the current range in which the alternating current iac is relatively close to 0 and a voltage range in which the alternating current voltage vac is relatively close to 0, so that the switching frequency of the switching transistor is not limited by a limiter during closed-loop control, thereby helping improve control effect of the power conversion apparatus 1. In addition, because the switching frequency fs of each switching transistor is less than the maximum switching frequency value when the alternating current iac is 0 and the alternating current voltage vac is 0, distortion of voltage and current waveforms generated due to operating mode switching performed by the power conversion apparatus 1 when the alternating current iac is 0 and the alternating current voltage vac is 0 can be reduced, thereby helping improve output performance of the power conversion apparatus 1. Further, in the process in which the alternating current iac approaches or departs from 0, within a current range (corresponding to a current range in which the alternating current iac is greater than or equal to iac_th1 and a current range in which the alternating current iac is less than or equal to iac_th2 in FIG. 5) in which the alternating current iac is relatively far away from 0, the power conversion apparatus 1 controls the switching frequency fs of each switching transistor according to a principle of negative correlation between an absolute value of an alternating current and an optimal switching frequency of a switching transistor, to reduce a current peak and a current loss of the inductor Lr, thereby improving efficiency of the power conversion apparatus 1.

In another optional embodiment, before controlling the output power of the power conversion apparatus 1, the controller 14 determines, based on a preset mapping relationship between a power factor PF of the alternating current end and both a first switching frequency threshold and a second switching frequency threshold, values of the first switching frequency threshold and the second switching frequency threshold when the power factor PF of the alternating current end of the power conversion apparatus 1 is a preset power factor. Then, the controller 14 controls the output power of the power conversion apparatus 1, and makes the power factor PF of the alternating current end be the preset power factor. Meanwhile, the controller 14 detects the alternating current iac. In a process in which the alternating current iac approaches 0, the controller 14 first controls the switching frequency of each switching transistor in the foregoing four bridge arms to increase to the maximum switching frequency value of the switching transistor. After controlling the switching frequency of each switching transistor to increase to the maximum switching frequency value of the switching transistor, the controller 14 first controls the switching frequency of each switching transistor to decrease to a first switching frequency, and then controls the switching frequency of each switching transistor to increase to a second switching frequency, where the second switching frequency is less than the maximum switching frequency value. In addition, in a process in which the alternating current iac departs from 0, the controller 14 first controls the switching frequency of each switching transistor to start increasing from the second switching frequency to the maximum switching frequency value of the switching transistor, and then controls the switching frequency of each switching transistor to decrease.

The first switching frequency is a switching frequency of each switching transistor when the alternating current voltage vac is 0, and the first switching frequency is less than or equal to the first switching frequency threshold. The second switching frequency is a switching frequency of each switching transistor when the alternating current iac is 0, and the second switching frequency is less than or equal to the second switching frequency threshold.

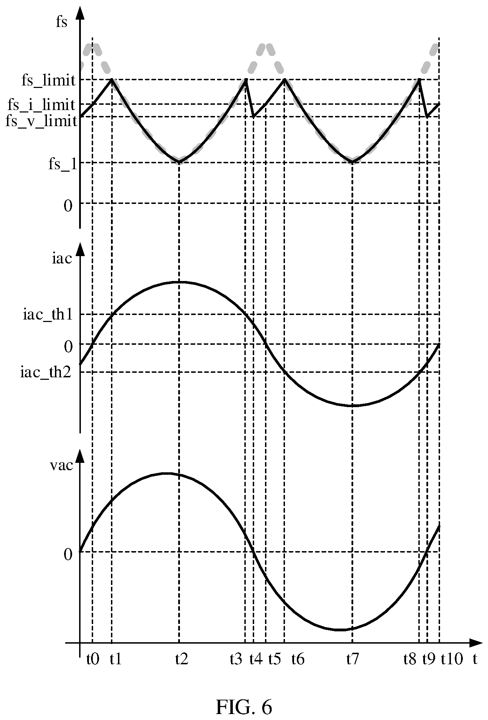

For ease of understanding, with reference to a diagram of a switching frequency waveform of a switching transistor shown in FIG. 6, the following specifically describes this embodiment by using an example in which the first switching frequency is the first switching frequency threshold and the second switching frequency is the second switching frequency threshold. As shown in FIG. 6, for a specific control manner in which the controller 14 controls the switching frequency fs of each switching transistor in a time period from t0 to t4 within an operating period T of the alternating current iac, refer to the descriptions of the part corresponding to the time period from t0 to t4 in FIG. 5. Details are not described herein again.

At the moment t4, the alternating current voltage vac decreases to 0, and the controller 14 controls the switching frequency fs of each switching transistor to decrease to the first switching frequency threshold fs_v_limit.

In a time period from t4 to t5, the alternating current iac continues to decrease, that is, the alternating current iac continues to approach 0, and the controller 14 controls the switching frequency fs of each switching transistor to start increasing from the first switching frequency threshold fs_v_limit.

At the moment t5, the alternating current iac decreases to 0, and the controller 14 controls the switching frequency fs of each switching transistor to increase to the second switching frequency threshold fs_i_limit. The second switching frequency threshold fs_i_limit is less than the maximum switching frequency value fs_limit.

In a time period from t5 to t6, the alternating current iac starts to continuously decrease from 0, that is, the alternating current iac gradually departs from 0. In this case, the controller 14 controls the switching frequency fs of each switching transistor to start increasing from the second switching frequency threshold fs_i_limit.

At the moment t6, the controller 14 controls the switching frequency fs of each switching transistor to increase to the maximum switching frequency value fs_limit.

For a specific control manner in which the controller 14 controls the switching frequency fs of each switching transistor in a time period from t6 to t9, refer to the descriptions of the part corresponding to the time period from t6 to t9 in FIG. 5. Details are not described herein again.

At the moment t9, the alternating current voltage vac increases to 0, and the controller 14 controls the switching frequency fs of each switching transistor to decrease to the first switching frequency threshold fs_v_limit.

In a time period from t9 to t10, the alternating current iac continues to increase, that is, the alternating current iac continues to approach 0, and the controller 14 controls the switching frequency fs of each switching transistor to start increasing from the first switching frequency threshold fs_v_limit.

At the moment t10, the alternating current iac increases to 0, and the controller 14 controls the switching frequency fs of each switching transistor to increase to the second switching frequency threshold fs_i_limit.

It should be noted that, to ensure that efficiency of the power conversion apparatus 1 is improved while control effect of the power conversion apparatus 1 and output performance of the power conversion apparatus 1 are improved, the controller 14 may further adjust values of the first switching frequency threshold fs_v_limit and the second switching frequency threshold fs_i_limit based on a change in the power factor PF of the alternating current end. Specifically, the controller 14 may detect the current power factor PF of the alternating current end based on a preset frequency (for example, an integer multiple of an alternating current frequency of the alternating current iac), and adjust the first switching frequency threshold fs_v_limit and the second switching frequency threshold fs_i_limit based on the current power factor PF of the alternating current end, so that both the first switching frequency threshold fs_v_limit and the second switching frequency threshold fs_i_limit are positively correlated with the power factor PF of the alternating current end.

In addition, for this embodiment, without a limitation that the second switching frequency is less than or equal to the second switching frequency threshold, and with only a limitation that the second switching frequency is less than the maximum switching frequency value, the controller 14 can still make the switching frequency of each switching transistor less than the maximum switching frequency value within a current range (corresponding to the current range (iac_th2, iac_th1) in FIG. 6) in which the alternating current iac is relatively close to 0.

It may be understood that, in the process in which the alternating current iac approaches or departs from 0, within the current range in which the alternating current iac is relatively close to 0, the power conversion apparatus 1 controls the switching frequency fs of each switching transistor to first decrease to the first switching frequency, then increase to the second switching frequency, and finally continue to increase, to ensure that the switching frequency fs of each switching transistor is less than the maximum switching frequency value within the current range in which the alternating current iac is relatively close to 0 and a voltage range in which the alternating current voltage vac is relatively close to 0, so that the switching frequency of the switching transistor is not limited by a limiter during closed-loop control, thereby helping improve control effect of the power conversion apparatus 1. In addition, because the switching frequency fs of each switching transistor is less than the maximum switching frequency value when the alternating current iac is 0 and the alternating current voltage vac is 0, distortion of voltage and current waveforms generated due to operating mode switching performed by the power conversion apparatus 1 when the alternating current iac is 0 and the alternating current voltage vac is 0 can be reduced, thereby helping improve output performance of the power conversion apparatus 1. In addition, in the process in which the alternating current iac approaches or departs from 0, within a current range (corresponding to a current range in which the alternating current iac is greater than or equal to iac_th1 and a current range in which the alternating current iac is less than or equal to iac_th2 in FIG. 6) in which the alternating current iac is relatively far away from 0, the power conversion apparatus 1 controls the switching frequency fs of each switching transistor according to a principle of negative correlation between an absolute value of an alternating current and an optimal switching frequency of a switching transistor, to reduce a current peak and a current loss of the inductor Lr, thereby improving efficiency of the power conversion apparatus 1. Further, because the first switching frequency is less than the second switching frequency in this embodiment, when the alternating current voltage vac is relatively low, the power conversion apparatus 1 may be caused to output a larger alternating current iac, so that the power factor PF may be lower and more applicable.

In another optional embodiment, before controlling the output power of the power conversion apparatus 1, the controller 14 determines, based on a preset mapping relationship between a power factor PF of the alternating current end and both a first switching frequency threshold and a second switching frequency threshold, values of the first switching frequency threshold and the second switching frequency threshold when the power factor PF of the alternating current end of the power conversion apparatus 1 is a preset power factor. Then, the controller 14 controls the output power of the power conversion apparatus 1, and makes the power factor PF of the alternating current end be the preset power factor. Meanwhile, the controller 14 detects the alternating current iac. In a process in which the alternating current iac approaches 0, the controller 14 first controls the switching frequency of each switching transistor in the foregoing four bridge arms to increase to the maximum switching frequency value of the switching transistor. After controlling the switching frequency of each switching transistor to increase to the maximum switching frequency value of the switching transistor, the controller 14 first controls the switching frequency of each switching transistor to decrease to a first switching frequency, and then controls the switching frequency of each switching transistor to remain at the first switching frequency. In addition, in a process in which the alternating current iac departs from 0, the controller 14 first controls the switching frequency of each switching transistor to start increasing from the first switching frequency to the maximum switching frequency value of the switching transistor, and then controls the switching frequency of each switching transistor to decrease.

The first switching frequency is a switching frequency of each switching transistor when the alternating current voltage vac is 0, and the first switching frequency is less than or equal to the first switching frequency threshold. The second switching frequency is a switching frequency of each switching transistor when the alternating current iac is 0, and the second switching frequency is less than or equal to the second switching frequency threshold.

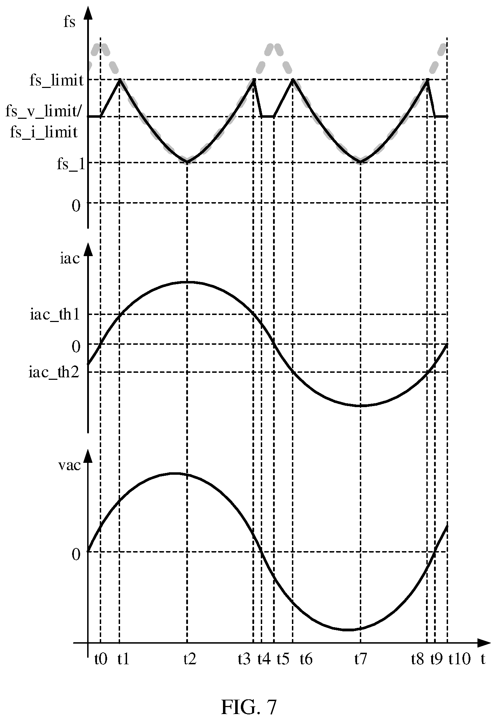

For ease of understanding, with reference to a diagram of a switching frequency waveform of a switching transistor shown in FIG. 7, the following specifically describes this embodiment by using an example in which the first switching frequency is the first switching frequency threshold and the second switching frequency is the second switching frequency threshold. As shown in FIG. 7, for a specific control manner in which the controller 14 controls the switching frequency fs of each switching transistor in a time period from t0 to t4 within an operating period T of the alternating current iac, refer to the descriptions of the part corresponding to the time period from t0 to t4 in FIG. 5. Details are not described herein again.

At the moment t4, the alternating current voltage vac decreases to 0, and the controller 14 controls the switching frequency fs of each switching transistor to decrease to the first switching frequency threshold fs_v_limit.

In a time period from t4 to t5, the alternating current iac continues to decrease, that is, the alternating current iac continues to approach 0, and the controller 14 controls the switching frequency fs of each switching transistor to remain at the first switching frequency threshold fs_v_limit.

At the moment t5, the alternating current iac decreases to 0, and the controller 14 controls the switching frequency of each switching transistor to still remain at the first switching frequency threshold fs_v_limit. The first switching frequency threshold fs_v_limit is the same as the second switching frequency threshold fs_i_limit.

In a time period from t5 to t6, the alternating current iac starts to continuously decrease from 0, that is, the alternating current iac gradually departs from 0. In this case, the controller 14 controls the switching frequency fs of each switching transistor to start increasing from the first switching frequency threshold fs_v_limit.

At the moment t6, the controller 14 controls the switching frequency fs of each switching transistor to increase to the maximum switching frequency value fs_limit.

For a specific control manner in which the controller 14 controls the switching frequency fs of each switching transistor in a time period from t6 to t9, refer to the descriptions of the part corresponding to the time period from t6 to t9 in FIG. 5. Details are not described herein again.

At the moment t9, the alternating current voltage vac increases to 0, and the controller 14 controls the switching frequency fs of each switching transistor to decrease to the first switching frequency threshold fs_v_limit.

In a time period from t9 to t10, the alternating current iac continues to increase, that is, the alternating current iac continues to approach 0, and the controller 14 controls the switching frequency fs of each switching transistor to remain at the first switching frequency threshold fs_v_limit.

At the moment t10, the alternating current iac increases to 0, and the controller 14 controls the switching frequency fs of each switching transistor to still remain at the first switching frequency threshold fs_v_limit.

It should be noted that, to ensure that efficiency of the power conversion apparatus 1 is improved while control effect of the power conversion apparatus 1 and output performance of the power conversion apparatus 1 are improved, the controller 14 may further adjust values of the first switching frequency threshold fs_v_limit and the second switching frequency threshold fs_i_limit based on a change in the power factor PF of the alternating current end. Specifically, the controller 14 may detect the current power factor PF of the alternating current end based on a preset frequency, and adjust the first switching frequency threshold fs_v_limit and the second switching frequency threshold fs_i_limit based on the current power factor PF of the alternating current end, so that both the first switching frequency threshold fs_v_limit and the second switching frequency threshold fs_i_limit are positively correlated with the power factor PF of the alternating current end.

In addition, for this embodiment, without a limitation that the first switching frequency is less than or equal to the first switching frequency threshold, the controller 14 can still make the switching frequency of each switching transistor less than the maximum switching frequency value within a current range (corresponding to the current range (iac_th2, iac_th1) in FIG. 7) in which the alternating current iac is relatively close to 0.

It may be understood that, in the process in which the alternating current iac approaches or departs from 0, within the current range in which the alternating current iac is relatively close to 0, the power conversion apparatus 1 controls the switching frequency fs of each switching transistor to first decrease to the first switching frequency, then increase to the second switching frequency, and finally continue to increase, to ensure that the switching frequency fs of each switching transistor is less than the maximum switching frequency value within the current range in which the alternating current iac is relatively close to 0 and a voltage range in which the alternating current voltage vac is relatively close to 0, so that the switching frequency of the switching transistor is not limited by a limiter during closed-loop control, thereby helping improve control effect of the power conversion apparatus 1. In addition, because the switching frequency fs of each switching transistor is less than the maximum switching frequency value when the alternating current iac is 0 and the alternating current voltage vac is 0, distortion of voltage and current waveforms generated due to operating mode switching performed by the power conversion apparatus 1 when the alternating current iac is 0 and the alternating current voltage vac is 0 can be reduced, thereby helping improve output performance of the power conversion apparatus 1. In addition, in the process in which the alternating current iac approaches or departs from 0, within a current range (corresponding to a current range in which the alternating current iac is greater than or equal to iac_th1 and a current range in which the alternating current iac is less than or equal to iac_th2 in FIG. 7) in which the alternating current iac is relatively far away from 0, the power conversion apparatus 1 controls the switching frequency fs of each switching transistor according to a principle of negative correlation between an absolute value of an alternating current and an optimal switching frequency of a switching transistor, to reduce a current peak and a current loss of the inductor Lr, thereby improving efficiency of the power conversion apparatus 1. Further, the first switching frequency is the same as the second switching frequency in this embodiment, so that a switching frequency control manner of the power conversion apparatus 1 is simple and easy to implement.

In another implementation, after an absolute value of the alternating current voltage vac decreases to 0, a switching frequency of any switching transistor in the foregoing four bridge arms increases to a maximum switching frequency value.

In an embodiment, before controlling the output power of the power conversion apparatus 1, the controller 14 determines, based on a preset mapping relationship between a power factor PF of the alternating current end and a first switching frequency threshold, a value of the first switching frequency threshold when the power factor PF of the alternating current end of the power conversion apparatus 1 is a preset power factor. Then, the controller 14 controls the output power of the power conversion apparatus 1, and makes the power factor PF of the alternating current end be the preset power factor. Meanwhile, the controller 14 detects the alternating current iac. In a process in which the alternating current iac approaches 0, the controller 14 first controls the switching frequency of each switching transistor in the foregoing four bridge arms to increase to the maximum switching frequency value of the switching transistor. After controlling the switching frequency of each switching transistor to increase to the maximum switching frequency value of the switching transistor, the controller 14 controls the switching frequency of each switching transistor to decrease to a second switching frequency. In addition, in a process in which the alternating current iac departs from 0, the controller 14 first controls the switching frequency of each switching transistor to start increasing from the second switching frequency to the maximum switching frequency value of the switching transistor, and then controls the switching frequency of each switching transistor to decrease.

The second switching frequency is a switching frequency of each switching transistor when the alternating current iac is 0, and the second switching frequency is less than or equal to the second switching frequency threshold.

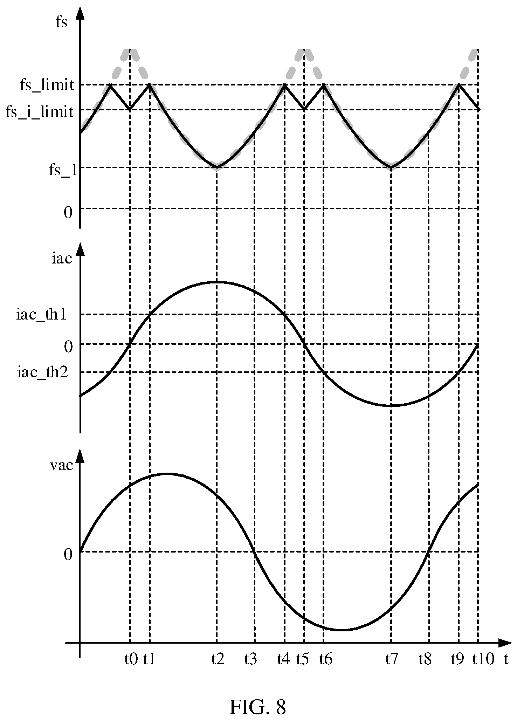

For ease of understanding, with reference to a diagram of a switching frequency waveform of a switching transistor shown in FIG. 8, the following specifically describes this embodiment by using an example in which the second switching frequency is the second switching frequency threshold. As shown in FIG. 8, in a time period from t0 to t1 within an operating period T (that is, a time period from t0 to t10) of the alternating current iac, the alternating current iac continuously increases from 0, that is, the alternating current iac gradually departs from 0. In this case, the controller 14 controls the switching frequency fs of each switching transistor to start increasing from the second switching frequency threshold fs_i_limit.

At the moment t1, the controller 14 controls the switching frequency fs of each switching transistor to increase to the maximum switching frequency value fs_limit of the switching transistor.

In a time period from t1 to t2, the alternating current iac continues to increase, that is, the alternating current iac continues to gradually depart from 0. The controller 14 controls, according to a principle of negative correlation between an absolute value of the alternating current iac and an optimal switching frequency of the switching transistor sought by the power conversion apparatus 1, the switching frequency fs of each switching transistor to start decreasing from the maximum switching frequency value fs_limit.

At the moment t2, the alternating current iac reaches a maximum value, and the controller 14 controls, according to the principle of negative correlation between an absolute value of the alternating current iac and an optimal switching frequency of the switching transistor sought by the power conversion apparatus 1, the switching frequency fs of each switching transistor to decrease to a switching frequency fs_1.

In a time period from t2 to t3, the alternating current iac starts to continuously decrease, that is, the alternating current iac starts to approach 0. In this case, the controller 14 controls, according to the principle of negative correlation between an absolute value of the alternating current iac and an optimal switching frequency of the switching transistor sought by the power conversion apparatus 1, the switching frequency fs of each switching transistor to start gradually increasing from the switching frequency fs_1.

At the moment t3, the alternating current voltage vac decreases to 0, and the controller 14 continues to control, according to the principle of negative correlation between an absolute value of the alternating current iac and an optimal switching frequency of the switching transistor sought by the power conversion apparatus 1, the switching frequency fs of each switching transistor to increase. In this case, the switching frequency fs of each switching transistor does not reach the maximum switching frequency value fs_limit.

In a time period from t3 to t4, the alternating current iac continues to decrease, that is, the alternating current iac continues to approach 0. The controller 14 continues to control, according to the principle of negative correlation between an absolute value of the alternating current iac and an optimal switching frequency of the switching transistor sought by the power conversion apparatus 1, the switching frequency fs of each switching transistor to increase.

At the moment t4, the controller 14 controls, according to the principle of negative correlation between an absolute value of the alternating current iac and an optimal switching frequency of the switching transistor sought by the power conversion apparatus 1, the switching frequency fs of each switching transistor to increase to the maximum switching frequency value fs_limit of the switching transistor.

In a time period from t4 to t5, the alternating current iac continues to decrease, that is, the alternating current iac continues to approach 0. The controller 14 no longer follows the principle of negative correlation between an absolute value of the alternating current iac and an optimal switching frequency of the switching transistor sought by the power conversion apparatus 1, but controls the switching frequency fs of each switching transistor to start decreasing from the maximum switching frequency value fs_limit.

At the moment t5, the alternating current iac decreases to 0, and the controller 14 controls the switching frequency fs of each switching transistor to decrease to the second switching frequency threshold fs_i_limit.

In a time period from t5 to t6, the alternating current iac starts to continuously decrease from 0, that is, the alternating current iac gradually departs from 0. In this case, the controller 14 controls the switching frequency fs of each switching transistor to start increasing from the second switching frequency threshold fs_i_limit.

At the moment t6, the controller 14 controls the switching frequency fs of each switching transistor to increase to the maximum switching frequency value fs_limit.

In a time period from t6 to t7, the alternating current iac continues to decrease, that is, the alternating current iac continues to gradually depart from 0. The controller 14 controls, according to the principle of negative correlation between an absolute value of the alternating current iac and an optimal switching frequency of the switching transistor sought by the power conversion apparatus 1, the switching frequency fs of each switching transistor to start decreasing from the maximum switching frequency value fs_limit.

At the moment t7, the controller 14 controls the switching frequency fs of each switching transistor to decrease to the switching frequency fs_1.

In a time period from t7 to t9, the alternating current iac continuously increases from 0, that is, the alternating current iac starts to approach 0. In this case, the controller 14 controls, according to the principle of negative correlation between an absolute value of the alternating current iac and an optimal switching frequency of the switching transistor sought by the power conversion apparatus 1, the switching frequency fs of each switching transistor to start increasing from the switching frequency fs_1. In addition, at the moment t8 in the time period, the alternating current voltage vac increases to 0. In this case, the switching frequency fs of each switching transistor does not reach the maximum switching frequency value fs_limit.

At the moment t9, the controller 14 controls the switching frequency fs of each switching transistor to increase to the maximum switching frequency value fs_limit.

In a time period from t9 to t10, the alternating current iac continues to increase, that is, the alternating current iac continues to approach 0, and the controller 14 controls the switching frequency fs of each switching transistor to start decreasing from the maximum switching frequency value fs_limit.

At the moment t10, the alternating current iac increases to 0, and the controller 14 controls the switching frequency fs of each switching transistor to decrease to the second switching frequency threshold fs_i_limit.

It should be noted that, to ensure that efficiency of the power conversion apparatus 1 is improved while control effect of the power conversion apparatus 1 and output performance of the power conversion apparatus 1 are improved, the controller 14 may further adjust a value of the first switching frequency threshold fs_v_limit based on a change in the power factor PF of the alternating current end. Specifically, the controller 14 may detect the current power factor PF of the alternating current end based on a preset frequency, and adjust the first switching frequency threshold fs_v_limit based on the current power factor PF of the alternating current end, so that the first switching frequency threshold fs_v_limit is positively correlated with the power factor PF of the alternating current end. In other words, the first switching frequency threshold fs_v_limit increases or decreases as the power factor PF of the alternating current end increases or decreases.

In addition, for this embodiment, without a limitation that the second switching frequency is less than or equal to the second switching frequency threshold, the controller 14 can still make the switching frequency of each switching transistor less than the maximum switching frequency value within a current range (corresponding to the current range (iac_th2, iac_th1) in FIG. 8) in which the alternating current iac is relatively close to 0.

It may be understood that, in the process in which the alternating current iac approaches or departs from 0, within the current range in which the alternating current iac is relatively close to 0, the power conversion apparatus 1 controls the switching frequency fs of each switching transistor to first decrease to the second switching frequency and then increase, to ensure that the switching frequency fs of each switching transistor is less than the maximum switching frequency value within the current range in which the alternating current iac is relatively close to 0, so that the switching frequency of the switching transistor is not limited by a limiter during closed-loop control, thereby helping improve control effect of the power conversion apparatus 1. In addition, because the switching frequency fs of each switching transistor is less than the maximum switching frequency value when the alternating current iac is 0 and the alternating current voltage vac is 0, distortion of voltage and current waveforms generated due to operating mode switching performed by the power conversion apparatus 1 when the alternating current iac is 0 and the alternating current voltage vac is 0 can be reduced, thereby helping improve output performance of the power conversion apparatus 1. Further, in the process in which the alternating current iac approaches or departs from 0, within a current range (corresponding to a current range in which the alternating current iac is greater than or equal to iac_th1 and a current range in which the alternating current iac is less than or equal to iac_th2 in FIG. 8) in which the alternating current iac is relatively far away from 0, the power conversion apparatus 1 controls the switching frequency fs of each switching transistor according to a principle of negative correlation between an absolute value of an alternating current and an optimal switching frequency of a switching transistor, to reduce a current peak and a current loss of the inductor Lr, thereby improving efficiency of the power conversion apparatus 1.

In this application, in the process in which the alternating current of the alternating current end approaches or departs from 0, within a current range (including 0) in which the alternating current of the alternating current end is relatively close to 0, the power conversion apparatus 1 controls the switching frequencies of the switching transistors in the direct current side bridge circuit 11 and the alternating current side bridge circuit 13 to be less than the maximum switching frequency value, so that the switching frequency of each switching transistor is less than the maximum switching frequency value when the alternating current iac is 0 and the alternating current voltage vac is 0. In this way, the switching frequencies of the switching transistors are not limited by a limiter during closed-loop control, thereby helping improve control effect of the power conversion apparatus 1. In addition, because the switching frequency of each switching transistor is less than the maximum switching frequency value when the alternating current iac is 0 and the alternating current voltage vac is 0, distortion of voltage and current waveforms generated due to operating mode switching performed by the power conversion apparatus 1 when the alternating current iac is 0 and/or the alternating current voltage vac is 0 can be further reduced, thereby helping improve output performance of the power conversion apparatus 1. Further, in the process in which the alternating current of the alternating current end approaches or departs from 0, within a current range in which the alternating current of the alternating current end is relatively far away from 0, the power conversion apparatus 1 controls the switching frequency of each switching transistor according to a principle of negative correlation between an absolute value of an alternating current and an optimal switching frequency of a switching transistor, to reduce a current peak and a current loss of the inductor Lr, thereby improving efficiency of the power conversion apparatus 1.

It should be noted that in this application, when controlling the switching frequency of the switching transistor, the controller 14 needs only to ensure that the switching frequency of the switching transistor is monotonic, and whether a change rate of the switching frequency of the switching transistor changes is not limited. In this application, the inductor Lr may be a leakage inductor of the transformer 12, or may be an inductor independent of the transformer 12. This is not limited in this application. In addition, in addition to adjusting the first switching frequency threshold or the second switching frequency threshold based on the power factor PF of the alternating current end, the power conversion apparatus 1 may alternatively adjust the first switching frequency threshold or the second switching frequency threshold based on a direct current idc of the direct current end, an alternating current root-mean-square value of the alternating current end, a direct current voltage vdc of the direct current end, or an alternating current voltage root-mean-square value of the alternating current end of the power conversion apparatus 1.

For example, before controlling the output power of the power conversion apparatus 1, the controller 14 determines, based on a preset mapping relationship between the direct current idc and the first switching frequency threshold or the second switching frequency threshold, a value of the first switching frequency threshold or the second switching frequency threshold when the direct current idc is a preset direct current. The preset mapping relationship between the direct current idc and the first switching frequency threshold or the second switching frequency threshold is that the first switching frequency threshold or the second switching frequency threshold is positively correlated with the direct current idc. Correspondingly, to ensure that efficiency of the power conversion apparatus 1 is improved while control effect of the power conversion apparatus 1 and output performance of the power conversion apparatus 1 are improved, the controller 14 may further adjust the value of the first switching frequency threshold or the second switching frequency threshold based on a change in the direct current idc. Specifically, the controller 14 may detect the direct current idc based on a preset frequency, and adjust the first switching frequency threshold or the second switching frequency threshold based on the current direct current, so that the first switching frequency threshold or the second switching frequency threshold is positively correlated with the direct current idc.

For example, before controlling the output power of the power conversion apparatus 1, the controller 14 determines, based on a preset mapping relationship between the alternating current root-mean-square value of the alternating current end and the first switching frequency threshold or the second switching frequency threshold, a value of the first switching frequency threshold or the second switching frequency threshold when the alternating current root-mean-square value of the alternating current end is a preset alternating current root-mean-square value. The preset mapping relationship between the alternating current root-mean-square value of the alternating current end and the first switching frequency threshold or the second switching frequency threshold is that the first switching frequency threshold or the second switching frequency threshold is positively correlated with the alternating current root-mean-square value of the alternating current end. Correspondingly, to ensure that efficiency of the power conversion apparatus 1 is improved while control effect of the power conversion apparatus 1 and output performance of the power conversion apparatus 1 are improved, the controller 14 may further adjust the value of the first switching frequency threshold or the second switching frequency threshold based on a change in the alternating current root-mean-square value of the alternating current end. Specifically, the controller 14 may detect the alternating current root-mean-square value of the alternating current end based on a preset frequency, and adjust the first switching frequency threshold or the second switching frequency threshold based on the current alternating current root-mean-square value of the alternating current end, so that the first switching frequency threshold or the second switching frequency threshold is positively correlated with the alternating current root-mean-square value of the alternating current end.

For example, before controlling the output power of the power conversion apparatus 1, the controller 14 determines, based on a preset mapping relationship between the direct current voltage vdc and the first switching frequency threshold or the second switching frequency threshold, a value of the first switching frequency threshold or the second switching frequency threshold when the direct current voltage vdc is a preset direct current voltage. When the direct current voltage vdc is smaller, to achieve the same alternating current iac with respect to the same alternating current voltage vac, a lower optimal switching frequency is sought, so that the switching frequency can reach the maximum switching frequency value only when the alternating current iac decreases to a relatively small value. Therefore, in this case, the first switching frequency threshold is larger, and the second switching frequency threshold is larger. Based on this, the preset mapping relationship between the direct current voltage vdc and the first switching frequency threshold or the second switching frequency threshold is that the first switching frequency threshold or the second switching frequency threshold is negatively correlated with the direct current voltage vdc. Correspondingly, to ensure that efficiency of the power conversion apparatus 1 is improved while control effect of the power conversion apparatus 1 and output performance of the power conversion apparatus 1 are improved, the controller 14 may further adjust the value of the first switching frequency threshold or the second switching frequency threshold based on a change in the direct current voltage vdc. Specifically, the controller 14 may detect the direct current voltage vdc based on a preset frequency, and adjust the first switching frequency threshold or the second switching frequency threshold based on the current direct current voltage, so that the first switching frequency threshold or the second switching frequency threshold is negatively correlated with the direct current voltage vdc. In other words, the first switching frequency threshold or the second switching frequency threshold decreases as the direct current voltage vdc increases, and increases as the direct current voltage vdc decreases.

For example, before controlling the output power of the power conversion apparatus 1, the controller 14 determines, based on a preset mapping relationship between the alternating current voltage root-mean-square value of the alternating current end and the first switching frequency threshold or the second switching frequency threshold, a value of the first switching frequency threshold or the second switching frequency threshold when the alternating current voltage root-mean-square value of the alternating current end is a preset alternating current voltage root-mean-square value. When the alternating current voltage root-mean-square value of the alternating current end larger, to achieve the same alternating current iac with respect to the same alternating current voltage vac, a lower optimal switching frequency is sought, so that the switching frequency can reach the maximum switching frequency value only when the alternating current iac decreases to a relatively small value. Therefore, in this case, the first switching frequency threshold is larger, and the second switching frequency threshold is larger. Based on this, the preset mapping relationship between the alternating current voltage root-mean-square value of the alternating current end and the first switching frequency threshold or the second switching frequency threshold is that the first switching frequency threshold or the second switching frequency threshold is positively correlated with the alternating current voltage root-mean-square value of the alternating current end. Correspondingly, to ensure that efficiency of the power conversion apparatus 1 is improved while control effect of the power conversion apparatus 1 and output performance of the power conversion apparatus 1 are improved, the controller 14 may further adjust the value of the first switching frequency threshold or the second switching frequency threshold based on a change in the alternating current voltage root-mean-square value of the alternating current end. Specifically, the controller 14 may detect the alternating current voltage root-mean-square value of the alternating current end based on a preset frequency, and adjust the first switching frequency threshold or the second switching frequency threshold based on the current alternating current voltage root-mean-square value of the alternating current end, so that the first switching frequency threshold or the second switching frequency threshold is positively correlated with the alternating current voltage root-mean-square value of the alternating current end.

It may be understood that the power conversion apparatus 1 may further adjust the first switching frequency threshold or the second switching frequency threshold based on the direct current idc, the alternating current root-mean-square value of the alternating current end, the direct current voltage vdc of the direct current end, or the alternating current voltage root-mean-square value of the alternating current end, to adjust the first switching frequency or the second switching frequency, thereby ensuring that a current peak and a current loss of the inductor Lr are reduced while control effect and output performance of the power conversion apparatus 1 are improved, so as to improve efficiency of the power conversion apparatus 1.

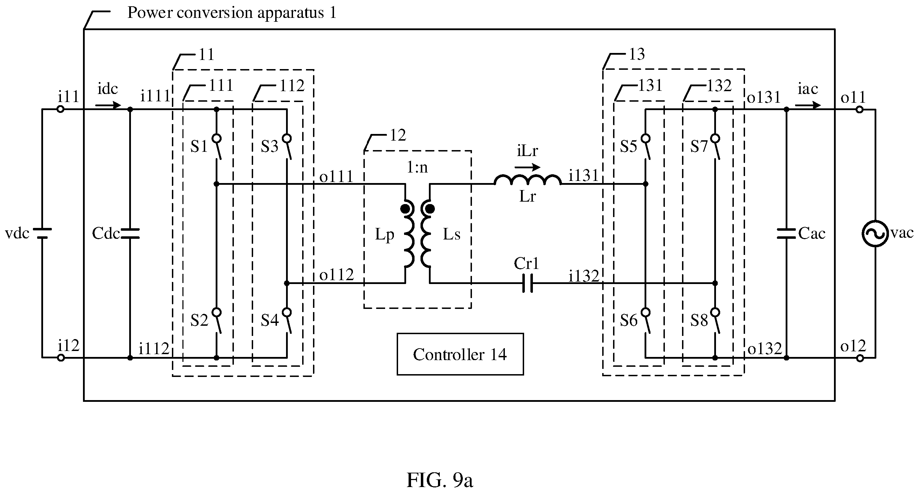

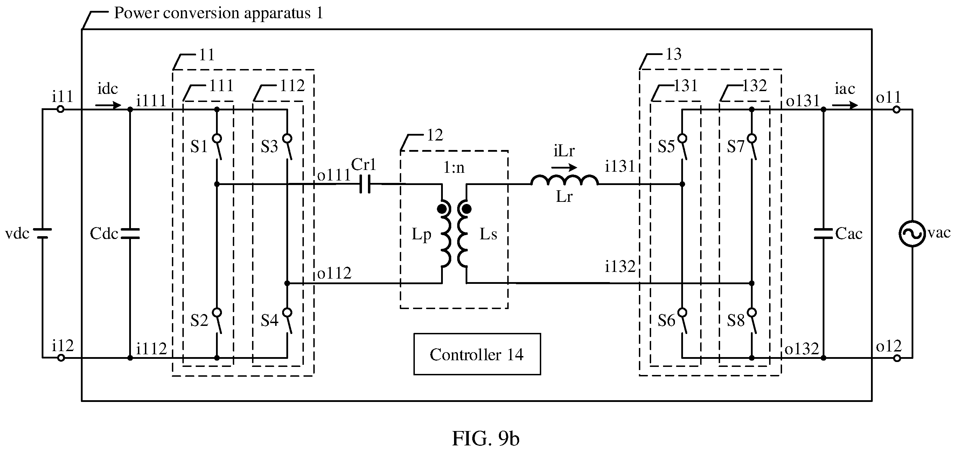

In addition, a manner in which the power conversion apparatus 1 shown in FIG. 4 controls the switching frequency of the switching transistor is also applicable to the power conversion apparatus 1 shown in FIG. 9a to FIG. 11. As shown in FIG. 9a, compared with the power conversion apparatus 1 shown in FIG. 4, the power conversion apparatus 1 shown in FIG. 9a further includes a first resonant capacitor Cr1. The first resonant capacitor Cr1, the inductor Lr, and the secondary winding Ls are connected in series between the input ends of the alternating current side bridge circuit 13. Specifically, the first resonant capacitor Cr1, the inductor Lr, and the secondary winding Ls are connected in series between the input end i131 and the input end i132 of the alternating current side bridge circuit 13. Optionally, the first resonant capacitor Cr1 may be alternatively connected to the primary winding Lp in series. For details, refer to the power conversion apparatus 1 shown in FIG. 9b. As shown in FIG. 9b, the first resonant capacitor Cr1 and the primary winding Lp are connected in series with the output ends of the direct current side bridge circuit 11. Specifically, the first resonant capacitor Cr1 and the primary winding Lp are connected in series between the output end o111 and the output end o112 of the direct current side bridge circuit 11.

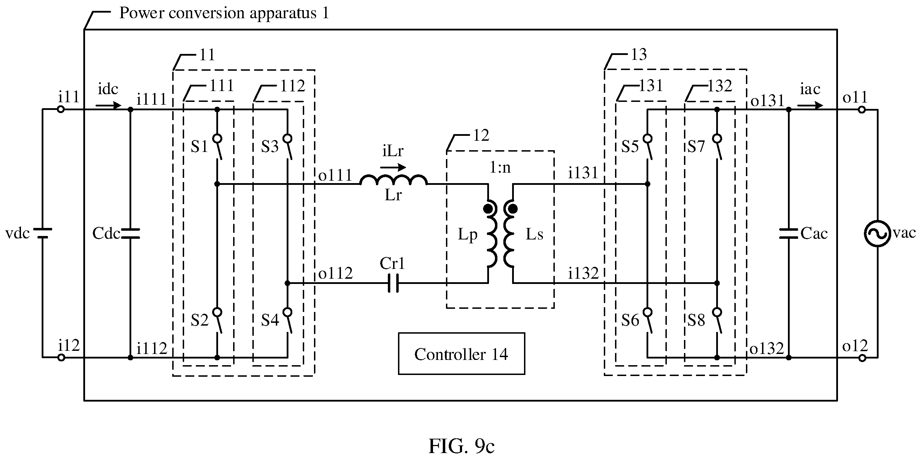

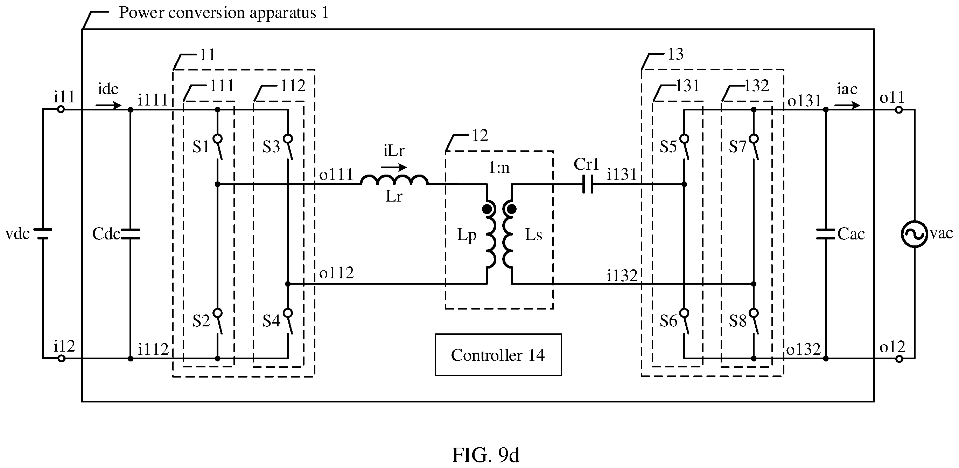

As shown in FIG. 9c, compared with the power conversion apparatus 1 shown in FIG. 4, the power conversion apparatus 1 shown in FIG. 9c further includes a first resonant capacitor Cr1. The inductor Lr, the primary winding Lp, and the first resonant capacitor Cr1 are connected in series between the output ends of the direct current side bridge circuit 11. Specifically, the inductor Lr, the primary winding Lp, and the first resonant capacitor Cr1 are connected in series between the output end o111 and the output end o112 of the direct current side bridge circuit 11. Optionally, the first resonant capacitor Cr1 may be alternatively connected to the secondary winding Ls in series. For details, refer to the power conversion apparatus 1 shown in FIG. 9d. As shown in FIG. 9d, the secondary winding Ls and the first resonant capacitor Cr1 are connected in series between the input ends of the alternating current side bridge circuit 13. Specifically, the secondary winding Ls and the first resonant capacitor Cr1 are connected in series between the input end i131 and the input end i132 of the alternating current side bridge circuit 13.

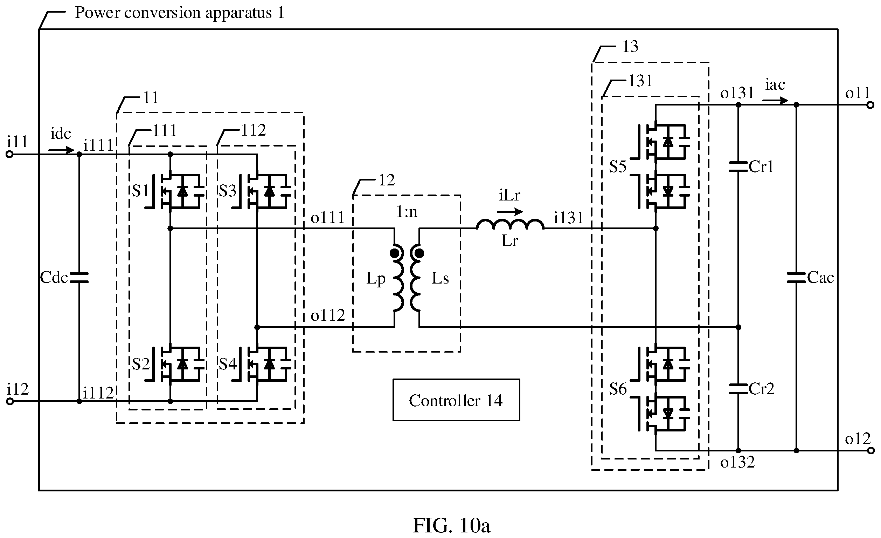

As shown in FIG. 10a, compared with the power conversion apparatus 1 shown in FIG. 4, the alternating current side bridge circuit 13 in the power conversion apparatus 1 shown in FIG. 10a is a half-bridge circuit, and the power conversion apparatus 1 further includes a first resonant capacitor Cr1 and a second resonant capacitor Cr2. Specifically, the alternating current side bridge circuit 13 includes a bridge arm 131 including a switching transistor S5 and a switching transistor S6 that are connected in series, and the switching transistor S5 and the switching transistor S6 each include two MOSFETs that are connected in series reversely. Two ends of the bridge arm 131 (that is, the output end o131 and the output end o132 of the alternating current side bridge circuit 13) are respectively connected to the first alternating current end o11 and the second alternating current end o12 of the power conversion apparatus 1. The first resonant capacitor Cr1 and the second resonant capacitor Cr2 are connected in series between the first alternating current end o11 and the second alternating current end o12 of the power conversion apparatus 1. The inductor Lr and the secondary winding Ls are connected in series between the input end i131 of the alternating current side bridge circuit 13 (that is, a midpoint of the bridge arm 131) and a capacitor midpoint. The capacitor midpoint is a joint between the first resonant capacitor Cr1 and the second resonant capacitor Cr2. Optionally, the inductor Lr in the power conversion apparatus 1 shown in FIG. 10a may be alternatively connected in series with the primary winding Lp between the output end o111 and the output end o112 of the direct current side bridge circuit 11.

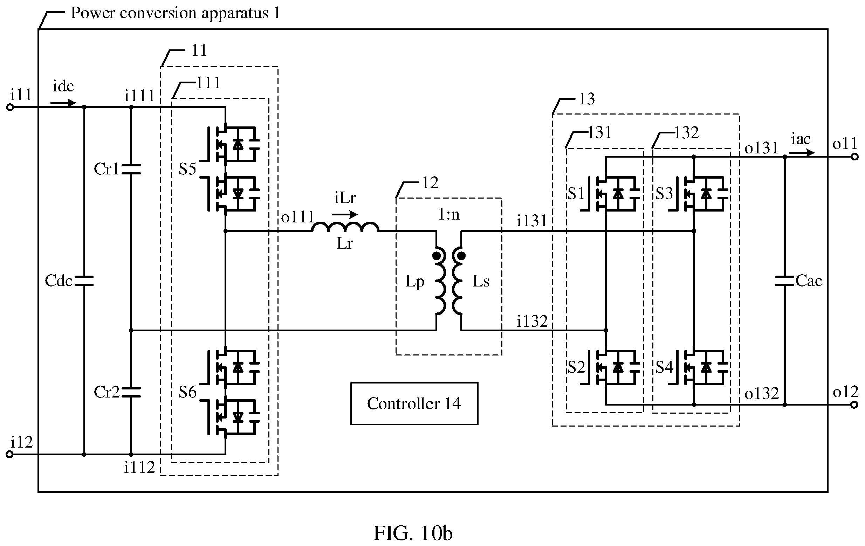

As shown in FIG. 10b, compared with the power conversion apparatus 1 shown in FIG. 4, the direct current side bridge circuit 11 in the power conversion apparatus 1 shown in FIG. 10b is a half-bridge circuit, and the power conversion apparatus 1 further includes a first resonant capacitor Cr1 and a second resonant capacitor Cr2. Specifically, the direct current side bridge circuit 11 includes a bridge arm 111 including a switching transistor S5 and a switching transistor S6 that are connected in series, and the switching transistor S5 and the switching transistor S6 each include two MOSFETs that are connected in series reversely. Two ends of the bridge arm 131 (that is, the input end i111 and the input end i112 of the direct current side bridge circuit 11) are respectively connected to the first direct current end i11 and the second direct current end i12 of the power conversion apparatus 1. The first resonant capacitor Cr1 and the second resonant capacitor Cr2 are connected in series between the first direct current end i11 and the second direct current end i12 of the power conversion apparatus 1. The inductor Lr and the primary winding Lp are connected in series between the output end o111 of the direct current side bridge circuit 11 (that is, a midpoint of the bridge arm 111) and a capacitor midpoint. The capacitor midpoint is a joint between the first resonant capacitor Cr1 and the second resonant capacitor Cr2. Optionally, the inductor Lr in the power conversion apparatus 1 shown in FIG. 10b may be alternatively connected in series with the secondary winding Ls between the input end i131 and the input end i132 of the alternating current side bridge circuit 13.

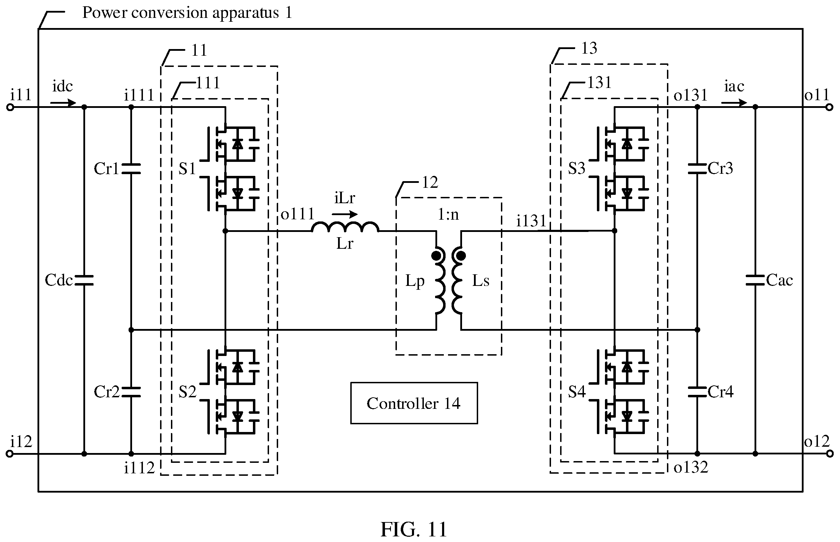

As shown in FIG. 11, compared with the power conversion apparatus 1 shown in FIG. 4, both the direct current side bridge circuit 11 and the alternating current side bridge circuit 13 in the power conversion apparatus 1 shown in FIG. 11 are half-bridge circuits, and the power conversion apparatus 1 further includes a first resonant capacitor Cr1, a second resonant capacitor Cr2, a third resonant capacitor Cr3, and a fourth resonant capacitor Cr4. Specifically, the direct current side bridge circuit 11 includes a bridge arm 111 including a switching transistor S1 and a switching transistor S2 that are connected in series, the alternating current side bridge circuit 13 includes a bridge arm 131 including a switching transistor S3 and a switching transistor S4 that are connected in series, and the switching transistor S1 to the switching transistor S4 each include two MOSFETs that are connected in series reversely. Two ends of the bridge arm 111 (that is, the input end i111 and the input end i112 of the direct current side bridge circuit 11) are respectively connected to the first direct current end i11 and the second direct current end i12 of the power conversion apparatus 1. The first resonant capacitor Cr1 and the second resonant capacitor Cr2 are connected in series between the first direct current end i11 and the second direct current end i12 of the power conversion apparatus 1. The inductor Lr and the primary winding Lp are connected in series between the output end o111 of the direct current side bridge circuit 11 (that is, a midpoint of the bridge arm 111) and a first capacitor midpoint. The first capacitor midpoint is a joint between the first resonant capacitor Cr1 and the second resonant capacitor Cr2. Two ends of the bridge arm 131 (that is, the output end o131 and the output end o132 of the alternating current side bridge circuit 13) are respectively connected to the first alternating current end o11 and the second alternating current end o12 of the power conversion apparatus 1. The third resonant capacitor Cr3 and the fourth resonant capacitor Cr4 are connected in series between the first alternating current end o11 and the second alternating current end o12 of the power conversion apparatus 1. A dotted terminal and an undotted terminal of the secondary winding Ls are respectively connected to the input end i131 of the alternating current side bridge circuit 13 (that is, a midpoint of the bridge arm 131) and a second capacitor midpoint. The second capacitor midpoint is a joint between the third resonant capacitor Cr3 and the fourth resonant capacitor Cr4. Optionally, the inductor Lr in the power conversion apparatus 1 shown in FIG. 11 may be alternatively connected in series with the secondary winding Ls between the input end i131 of the alternating current side bridge circuit 13 and the second capacitor midpoint.

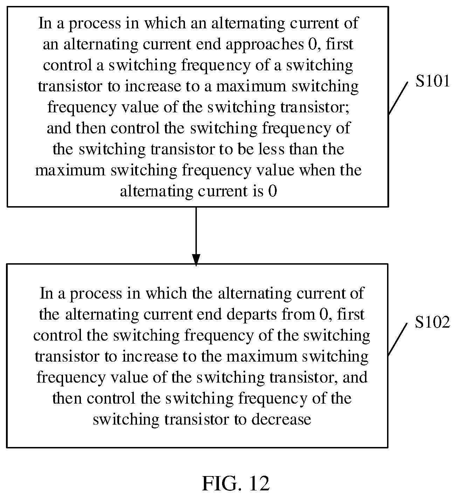

Refer to FIG. 12. FIG. 12 is a schematic flowchart of a control method for a power conversion apparatus according to this application. The control method for a power conversion apparatus provided in this embodiment of this application is applicable to the power conversion apparatus 1 shown in FIG. 3a to FIG. 11. The control method for a power conversion apparatus may include the following steps.

S101: In a process in which an alternating current of an alternating current end approaches 0, first control a switching frequency of a switching transistor to increase to a maximum switching frequency value of the switching transistor, and then control the switching frequency of the switching transistor to be less than the maximum switching frequency value when the alternating current is 0.

In an optional implementation, in the process in which the alternating current of the alternating current end approaches 0, the power conversion apparatus first controls switching frequencies of switching transistors in a direct current side bridge circuit and an alternating current side bridge circuit to increase to the maximum switching frequency value of the switching transistor. After the switching frequency of the switching transistor increases to the maximum switching frequency value, the power conversion apparatus first controls the switching frequency of the switching transistor to decrease to a first switching frequency, and then controls the switching frequency of the switching transistor to decrease to a second switching frequency.

In another optional implementation, in the process in which the alternating current of the alternating current end approaches 0, the power conversion apparatus first controls the switching frequency to increase to the maximum switching frequency value. After the switching frequency of the switching transistor increases to the maximum switching frequency value, the power conversion apparatus first controls the switching frequency of the switching transistor to decrease to a first switching frequency, and then controls the switching frequency of the switching transistor to increase to a second switching frequency. The second switching frequency is less than the maximum switching frequency value.

In another optional implementation, in the process in which the alternating current of the alternating current end approaches 0, the power conversion apparatus first controls the switching frequency to increase to the maximum switching frequency value. After the switching frequency of the switching transistor increases to the maximum switching frequency value, the power conversion apparatus first controls the switching frequency of the switching transistor to decrease to a first switching frequency, and then controls the switching frequency of the switching transistor to remain at the first switching frequency.

In another optional implementation, in the process in which the alternating current of the alternating current end approaches 0, the power conversion apparatus first controls the switching frequency of the switching transistor to increase to the maximum switching frequency value. After the switching frequency of the switching transistor increases to the maximum switching frequency value, the power conversion apparatus controls the switching frequency of the switching transistor to decrease to a second switching frequency.

The first switching frequency is a switching frequency of the switching transistor when an alternating current voltage of the alternating current end is 0, and the first switching frequency is less than or equal to a first switching frequency threshold. The second switching frequency is a switching frequency of the switching transistor when the alternating current is 0, and the second switching frequency is less than or equal to a second switching frequency threshold.

It should be noted that, to ensure that efficiency of the power conversion apparatus is improved while control effect of the power conversion apparatus and output performance of the power conversion apparatus are improved, the power conversion apparatus may further adjust the first switching frequency threshold or the second switching frequency threshold based on a change in a direct current or a direct current voltage of a direct current end, an alternating current root-mean-square value of the alternating current end, an alternating current voltage root-mean-square value, or a power factor, to adjust the first switching frequency or the second switching frequency.

For example, the power conversion apparatus further adjusts the first switching frequency threshold or the second switching frequency threshold based on the direct current of the direct current end or the alternating current root-mean-square value, so that the first switching frequency threshold or the second switching frequency threshold is positively correlated with the direct current or the alternating current root-mean-square value. For example, the power conversion apparatus further adjusts the first switching frequency threshold or the second switching frequency threshold based on the power factor of the alternating current end, so that the first switching frequency threshold or the second switching frequency is positively correlated with the power factor. For example, the power conversion apparatus further adjusts the first switching frequency threshold or the second switching frequency threshold based on the direct current voltage of the direct current end or the alternating current voltage root-mean-square value of the alternating current end, so that the first switching frequency threshold or the second switching frequency threshold is negatively correlated with the direct current voltage, and the first switching frequency threshold or the second switching frequency threshold is positively correlated with the alternating current voltage root-mean-square value.

S102: In a process in which the alternating current of the alternating current end departs from 0, first control the switching frequency of the switching transistor to increase to the maximum switching frequency value of the switching transistor, and then control the switching frequency of the switching transistor to decrease.

In an implementation, in the process in which the alternating current of the alternating current end departs from 0, the power conversion apparatus first controls the switching frequencies of the switching transistors in the direct current side bridge circuit and the alternating current side bridge circuit to increase from the first switching frequency or the second switching frequency to the maximum switching frequency value of the switching transistor. After the switching frequency of the switching transistor increases to the maximum switching frequency value, the power conversion apparatus controls the switching frequency of the switching transistor to decrease.

During specific implementation, for more operations performed by the power conversion apparatus in the control method for a power conversion apparatus provided in this application, refer to the implementations performed by the power conversion apparatus 1 shown in FIG. 3a to FIG. 11. Details are not described herein again.

In this application, in the process in which the alternating current of the alternating current end approaches or departs from 0, within a current range (including 0) in which the alternating current of the alternating current end is relatively close to 0, the power conversion apparatus controls the switching frequencies of the switching transistors in the direct current side bridge circuit and the alternating current side bridge circuit to be less than the maximum switching frequency value, so that the switching frequency of each switching transistor is less than the maximum switching frequency value when the alternating current is 0 and the alternating current voltage is 0. In this way, the switching frequencies of the switching transistors are not limited by a limiter during closed-loop control, thereby helping improve control effect of the power conversion apparatus. In addition, because the switching frequency of each switching transistor is less than the maximum switching frequency value when the alternating current is 0 and the alternating current voltage is 0, distortion of voltage and current waveforms generated due to operating mode switching performed by the power conversion apparatus when the alternating current is 0 and/or the alternating current voltage is 0 can be further reduced, thereby helping improve output performance of the power conversion apparatus. Further, in the process in which the alternating current of the alternating current end approaches or departs from 0, within a current range in which the alternating current of the alternating current end is far away from 0, the power conversion apparatus controls the switching frequencies of the switching transistors according to a principle of negative correlation between an absolute value of an alternating current and an optimal switching frequency of a switching transistor, to reduce a current peak and a current loss of an inductor, thereby improving efficiency of the power conversion apparatus.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, wherein the power conversion apparatus comprises a direct current end, a direct current side bridge circuit, a transformer, an alternating current side bridge circuit, an alternating current end, and a controller, the transformer comprises a primary winding and a secondary winding, and the direct current side bridge circuit and the alternating current side bridge circuit comprise switching transistors, wherein
the direct current side bridge circuit is connected between the direct current end and the primary winding, and the alternating current side bridge circuit is connected between the secondary winding and the alternating current end; and
the controller is configured to: in a process in which an alternating current of the alternating current end approaches 0, first control a switching frequency of the switching transistor to increase to a maximum switching frequency value of the switching transistor; and then control the switching frequency of the switching transistor to be less than the maximum switching frequency value when the alternating current is 0; and
in a process in which the alternating current of the alternating current end departs from 0, first control the switching frequency of the switching transistor to increase to the maximum switching frequency value of the switching transistor, and then control the switching frequency to decrease.

2. The power conversion apparatus according to claim 1, wherein the controller is configured to: in the process in which the alternating current of the alternating current end approaches 0, after controlling the switching frequency of the switching transistor to increase to the maximum switching frequency value of the switching transistor, first control the switching frequency to decrease to a first switching frequency, and then control the switching frequency to decrease to a second switching frequency.

3. The power conversion apparatus according to claim 1, wherein the controller is configured to: in the process in which the alternating current of the alternating current end approaches 0, after controlling the switching frequency of the switching transistor to increase to the maximum switching frequency value of the switching transistor, first control the switching frequency to decrease to a first switching frequency, and then control the switching frequency to increase to a second switching frequency, wherein the second switching frequency is less than the maximum switching frequency value.

4. The power conversion apparatus according to claim 1, wherein the controller is configured to: in the process in which the alternating current of the alternating current end approaches 0, after controlling the switching frequency of the switching transistor to increase to the maximum switching frequency value of the switching transistor, first control the switching frequency to decrease to a first switching frequency, and then control the switching frequency to remain at the first switching frequency.

5. The power conversion apparatus according to claim 1, wherein the controller is configured to: in the process in which the alternating current of the alternating current end approaches 0, after controlling the switching frequency of the switching transistor to increase to the maximum switching frequency value of the switching transistor, control the switching frequency to decrease to a second switching frequency.

6. The power conversion apparatus according to any one of claims 2 to 5, wherein the first switching frequency is a switching frequency of the switching transistor when an alternating current voltage of the alternating current end is 0, and the first switching frequency is less than or equal to a first switching frequency threshold; and the second switching frequency is a switching frequency of the switching transistor when the alternating current is 0, and the second switching frequency is less than or equal to a second switching frequency threshold.

7. The power conversion apparatus according to claim 6, wherein the first switching frequency threshold or the second switching frequency threshold is positively correlated with a direct current of the direct current end or an alternating current root-mean-square value of the alternating current end.

8. The power conversion apparatus according to claim 6, wherein the first switching frequency threshold or the second switching frequency threshold is positively correlated with a power factor of the alternating current end, and the power factor is a cosine value of a phase difference between an alternating current voltage and the alternating current of the alternating current end.

9. The power conversion apparatus according to claim 6, wherein the first switching frequency threshold or the second switching frequency threshold is negatively correlated with a direct current voltage of the direct current end, or the first switching frequency threshold or the second switching frequency threshold is positively correlated with an alternating current voltage root-mean-square value of the alternating current end.

10. The power conversion apparatus according to any one of claims 1 to 9, wherein the power conversion apparatus further comprises an inductor, and an input end of the direct current side bridge circuit is connected to the direct current end; the inductor and the primary winding are connected in series and then connected to an output end of the direct current side bridge circuit, and the secondary winding is connected to an input end of the alternating current side bridge circuit, or the primary winding is connected to an output end of the direct current side bridge circuit, and the inductor and the secondary winding are connected in series and then connected to an input end of the alternating current side bridge circuit; and an output end of the alternating current side bridge circuit is connected to the alternating current end.

11. The power conversion apparatus according to claim 10, wherein the direct current side bridge circuit comprises a half-bridge circuit or a full-bridge circuit, and the alternating current side bridge circuit comprises a half-bridge circuit or a full-bridge circuit.

12. The power conversion apparatus according to claim 11, wherein the direct current side bridge circuit is the half-bridge circuit, and the power conversion apparatus further comprises a first resonant capacitor and a second resonant capacitor, wherein
the first resonant capacitor and the second resonant capacitor are connected in series and then connected in parallel with the input end of the direct current side bridge circuit; and two ends of the primary winding are respectively connected to the output end of the direct current side bridge circuit and a capacitor midpoint, or the primary winding and the inductor are connected in series between the output end of the direct current side bridge circuit and the capacitor midpoint, and the capacitor midpoint is a joint between the first resonant capacitor and the second resonant capacitor.

13. The power conversion apparatus according to claim 11, wherein the alternating current side bridge circuit is the half-bridge circuit, and the power conversion apparatus further comprises a first resonant capacitor and a second resonant capacitor, wherein
the first resonant capacitor and the second resonant capacitor are connected in series and then connected in parallel with the output end of the alternating current side bridge circuit; and two ends of the secondary winding are respectively connected to the input end of the alternating current side bridge circuit and a capacitor midpoint, or the secondary winding and the inductor are connected in series between the input end of the alternating current side bridge circuit and the capacitor midpoint, and the capacitor midpoint is a joint between the first resonant capacitor and the second resonant capacitor.

14. The power conversion apparatus according to claim 11, wherein both the direct current side bridge circuit and the alternating current side bridge circuit are full-bridge circuits, the power conversion apparatus further comprises a first resonant capacitor, and the primary winding and the first resonant capacitor are connected in series with the output end of the direct current side bridge circuit, or the secondary winding, the inductor, and the first resonant capacitor are connected in series with the input end of the alternating current side bridge circuit, or the primary winding, the inductor, and the first resonant capacitor are connected in series with the output end of the direct current side bridge circuit, or the secondary winding and the first resonant capacitor are connected in series with the input end of the alternating current side bridge circuit.

15. A control method for a power conversion apparatus, wherein the method comprises:
in a process in which an alternating current of an alternating current end approaches 0, first controlling a switching frequency of a switching transistor to increase to a maximum switching frequency value of the switching transistor; and then controlling the switching frequency of the switching transistor to be less than the maximum switching frequency value when the alternating current is 0; or in a process in which the alternating current of the alternating current end departs from 0, first controlling the switching frequency of the switching transistor to increase to the maximum switching frequency value of the switching transistor, and then controlling the switching frequency to decrease, wherein the method is applicable to the power conversion apparatus, the power conversion apparatus comprises a direct current end, a direct current side bridge circuit, a transformer, an alternating current side bridge circuit, and the alternating current end, the transformer comprises a primary winding and a secondary winding, the direct current side bridge circuit is connected between the direct current end and the primary winding, and the alternating current side bridge circuit is connected between the secondary winding and the alternating current end.

16. The method according to claim 15, wherein controlling the switching frequency of the switching transistor to be less than the maximum switching frequency value when the alternating current is 0 comprises:
after controlling the switching frequency of the switching transistor to increase to the maximum switching frequency value of the switching transistor, first controlling the switching frequency to decrease to a first switching frequency, and then controlling the switching frequency to decrease to a second switching frequency.

17. The method according to claim 15, wherein controlling the switching frequency of the switching transistor to be less than the maximum switching frequency value when the alternating current is 0 comprises:
after controlling the switching frequency of the switching transistor to increase to the maximum switching frequency value of the switching transistor, first controlling the switching frequency to decrease to a first switching frequency, and then controlling the switching frequency to increase to a second switching frequency, wherein the second switching frequency is less than the maximum switching frequency value.

18. The method according to claim 15, wherein controlling the switching frequency of the switching transistor to be less than the maximum switching frequency value when the alternating current is 0 comprises:
after controlling the switching frequency of the switching transistor to increase to the maximum switching frequency value of the switching transistor, first controlling the switching frequency to decrease to a first switching frequency, and then controlling the switching frequency to remain at the first switching frequency.

19. The method according to claim 15, wherein controlling the switching frequency of the switching transistor to be less than the maximum switching frequency value when the alternating current is 0 comprises:
after controlling the switching frequency of the switching transistor to increase to the maximum switching frequency value of the switching transistor, controlling the switching frequency to decrease to a second switching frequency.

20. The method according to any one of claims 16 to 19, wherein the first switching frequency is a switching frequency of the switching transistor when an alternating current voltage of the alternating current end is 0, and the first switching frequency is less than or equal to a first switching frequency threshold; and the second switching frequency is a switching frequency of the switching transistor when the alternating current is 0, and the second switching frequency is less than or equal to a second switching frequency threshold.

21. The method according to claim 20, wherein the first switching frequency threshold or the second switching frequency threshold is positively correlated with a direct current of the direct current end or an alternating current root-mean-square value of the alternating current end.

22. The method according to claim 20, wherein the first switching frequency threshold or the second switching frequency is positively correlated with a power factor of the alternating current end, and the power factor is a cosine value of a phase difference between an alternating current voltage and the alternating current of the alternating current end.

23. The method according to claim 20, wherein the first switching frequency threshold or the second switching frequency threshold is negatively correlated with a direct current voltage of the direct current end, or the first switching frequency threshold or the second switching frequency threshold is positively correlated with an alternating current voltage root-mean-square value of the alternating current end.
